# EUROPEAN PATENT APPLICATION

(11) **EP 3 951 694 A1**
(43) Date of publication of application: **09.02.2022**
(21) Application number: 20781844.4
(22) Date of filing: 26.02.2020
(51) Int. Cl.: G06Q 50/06

(54) **INFORMATION PROCESSING DEVICE, INFORMATION PROCESSING METHOD, AND PROGRAM**

(30) Priority: 29.03.2019 JP 2019065425
(71) Applicant: Nippon Gas Co., Ltd., Tokyo 151-8582 (JP)
(72) Inventor: WADA Shinji, Tokyo 151-8582 (JP)
(74) Representative: Betten & Resch
(86) International application number: PCT/JP2020/007673
(87) International publication number: WO 2020/202912

(57) **Abstract**

Conventionally, it is difficult to predict the next delivery date of a gas cylinder for a customer. With an information processing apparatus A2, it is possible to predict the next delivery date of a gas cylinder for a customer. The information processing apparatus A2 includes: a gas information storage unit A212 that stores two or more pieces of gas information that contain gas use information as of two or more points in time, regarding use of gas in an LPG cylinder, in association with a customer identifier that identifies a customer; a customer identifier acceptance unit that accepts a customer identifier; a gas use information acquisition unit that acquires pieces of gas use information as of two or more points in time, paired with the customer identifier accepted by the customer identifier acceptance unit, from the gas information storage unit A212; a scheduled date prediction unit that acquires scheduled date information regarding a scheduled delivery date that is a date on which an amount of gas in the cylinder is small enough to satisfy a predetermined condition, using the pieces of gas use information as of two or more points in time acquired by the gas use information acquisition unit; and a scheduled date output unit that outputs the scheduled date information acquired by the scheduled date prediction unit.

## Description

### Technical field

The present invention relates to, for example, an information processing apparatus that predict a delivery date of a gas cylinder, using information regarding a gas use history of a customer.

### Background Art

According to conventional technology, there is a system for appropriately assigning delivery of LP gas cylinders to deliverers, the number of which is finite and variable (see Patent Document 1). According to this system, the total number of deliveries at the delivery base is assigned to each deliverer according to the rank of the deliverer, zip codes are managed as minimum area units, and pieces of delivery data sorted by zip code are assigned to the deliverers based on the number of deliveries thus assigned. As a result, this system can perform area management according to the delivery capabilities of the deliverers, by dynamically dividing the delivery area of the delivery base into sub areas constituted by one or more zip codes.

### Citation List

### Patent Document

Patent Document 1: JP 2013-254255A

### Summary of Invention

### Technical Problem

However, with the conventional technology, although it is possible to manage the area according to the delivery capabilities of the deliverers, it is difficult to predict the dates on which gas cylinders are to be delivered to the customers.

### Solution to Problem

An information processing apparatus according to a first aspect of the present invention is an information processing apparatus including: a gas information storage unit that stores two or more pieces of gas information that contain gas use information as of two or more points in time, regarding use of gas in an LPG cylinder, in association with a customer identifier that identifies a customer; a customer identifier acceptance unit that accepts a customer identifier; a gas use information acquisition unit that acquires pieces of gas use information as of two or more points in time, paired with the customer identifier accepted by the customer identifier acceptance unit, from the gas information storage unit; a scheduled date prediction unit that acquires scheduled date information regarding a scheduled delivery date that is a date on which an amount of gas in the cylinder is small enough to satisfy a predetermined condition, using the pieces of gas use information as of two or more points in time acquired by the gas use information acquisition unit; and a scheduled date output unit that outputs the scheduled date information acquired by the scheduled date prediction unit.

With such a configuration, it is possible to predict the next delivery date of a gas cylinder for a customer.

An information processing apparatus according to a second aspect of the present invention is the information processing apparatus according to the first aspect of the invention, further comprising: a customer information storage unit that stores one or more pieces of customer information that contain LPG cylinder information that contain cylinder capacity information regarding a capacity of an LPG cylinder of a customer identified by a customer identifier, in association with the customer identifier, wherein the scheduled date prediction unit includes: a use amount value calculation formula acquisition part that acquires a use amount value calculation formula that is a calculation formula for calculating information regarding an amount of gas used, using the pieces of gas use information as of two or more points in time acquired by the gas use information acquisition unit; and a scheduled date prediction part that acquires scheduled date information by acquiring LPG cylinder information that is paired with the customer identifier accepted by the customer identifier acceptance unit, from the customer information storage unit, and using the LPG cylinder information and the use amount value calculation formula acquired by the use amount value calculation formula acquisition part.

With such a configuration, it is possible to accurately predict the next delivery date of a gas cylinder for a customer.

An information processing apparatus according to a third aspect of the present invention is the information processing apparatus according to the first or second aspect of the invention, further comprising: a climate information acceptance unit that accepts climate information regarding climate, wherein the scheduled date prediction unit acquires scheduled date information, using the pieces of gas use information as of two or more points in time acquired by the gas use information acquisition unit, and the climate information accepted by the climate information acceptance unit.

With such a configuration, it is possible to predict the next delivery date of a gas cylinder for a customer, using climate information as well.

An information processing apparatus according to a fourth aspect of the present invention is the information processing apparatus according to the third aspect of the invention, wherein the scheduled date prediction unit acquires scheduled date information regarding a scheduled delivery date that is a date on which an amount of gas in a cylinder is small enough to satisfy a predetermined condition, using the pieces of gas use information as of two or more points in time acquired by the gas use information acquisition unit, and if the climate information accepted by the climate information acceptance unit is information that indicates that a temperature is high enough to satisfy a predetermined condition, or low enough to satisfy a predetermined condition, the scheduled date prediction unit corrects the scheduled date information so that the scheduled delivery date specified by the scheduled date information is set to be a later date or an earlier date, and acquires the scheduled date information to be output.

With such a configuration, it is possible to predict the next delivery date of a gas cylinder for a customer, using climate information appropriately.

An information processing apparatus according to a fifth aspect of the present invention is the information processing apparatus according to any one of the first to fourth aspects of the invention, further including: a gas information storage unit that stores two or more pieces of gas information that contain gas use information, in association with a customer identifier; a terminal acquisition unit that acquires gas information that is information that contains gas use information regarding use of gas in an LPG cylinder and corresponds to a cylinder identifier that identifies the LPG cylinder; a gas information reception unit that receives gas information that is associated with a cylinder identifier, from a gas information transmission apparatus that includes a terminal transmission unit that transmits the gas information acquired by the terminal acquisition unit, to the information processing apparatus; and a gas information accumulation unit that accumulates the gas information received by the gas information reception unit, in association with the customer identifier associated with the cylinder identifier, in the gas information storage unit.

With such a configuration, it is easier to collect gas information regarding customers.

### Advantageous Effects of Invention

With the information processing apparatus according to the present invention, it is possible to predict the next delivery date of a gas cylinder for a customer.

### Brief Description of Drawings

FIG. 1 is a conceptual diagram for an information system A according to Embodiment 1.
FIG. 2 is a block diagram for the information system A according to the same.
FIG. 3 is a block diagram for an information processing apparatus A2 according to the same.
FIG. 4 is a flowchart illustrating examples of operations that are performed by a gas information transmission apparatus A1 according to the same.
FIG. 5 is a flowchart illustrating examples of operations that are performed by an information processing apparatus A2 according to the same.
FIG. 6 is a flowchart illustrating examples of operations that are performed by a next deliverer terminal A3 according to the same.
FIG. 7 is a flowchart illustrating examples of operations that are performed by a facility terminal A4 according to the same.
FIG. 8 is a conceptual diagram for the information system A according to the same.
FIG. 9 is a conceptual diagram for an information system B according to Embodiment 2.
FIG. 10 is a block diagram for the information system B according to the same.
FIG. 11 is a flowchart illustrating an example of delivery date prediction processing that is performed by an information processing apparatus B2 according to the same.
FIG. 12 is a flowchart illustrating use amount value calculation formula acquisition processing according to the same.
FIG. 13 is a flowchart illustrating scheduled date prediction processing according to the same.
FIG. 14 is an overview diagram for a computer system according to the above embodiments.
FIG. 15 is a block diagram for the computer system according to the same.

### Description of Embodiments

The following describes embodiments of information system and so on with reference to the drawings. Note that the components with the same reference numerals in the embodiments perform the same operations, and therefore redundant descriptions thereof may be omitted.

### Embodiment 1

The present embodiment describes an information system that includes one or more gas information transmission apparatuses that acquire and transmit gas information that includes information regarding the use of gas in one or more LPG cylinders, and information processing apparatus.

In addition, the present embodiment describes an information system that includes a gas information transmission apparatus that transmits two or more pieces of gas information all at once. Note that the gas information transmission apparatus acquires gas use information described later, once an hour, and transmits the gas use information for one day, to the information processing apparatus, once a day, for example. Note that the gas information transmission apparatus may acquires the gas use information described later once an hour, and separately transmits the gas use information for one day, to the information processing apparatus, twice a day or more, for example.

Furthermore, the present embodiment describes an information system that includes an information processing apparatus that also receives delivery cylinder information described later, delivery vehicle position information described later, climate information described later, and cylinder replacement information described later.

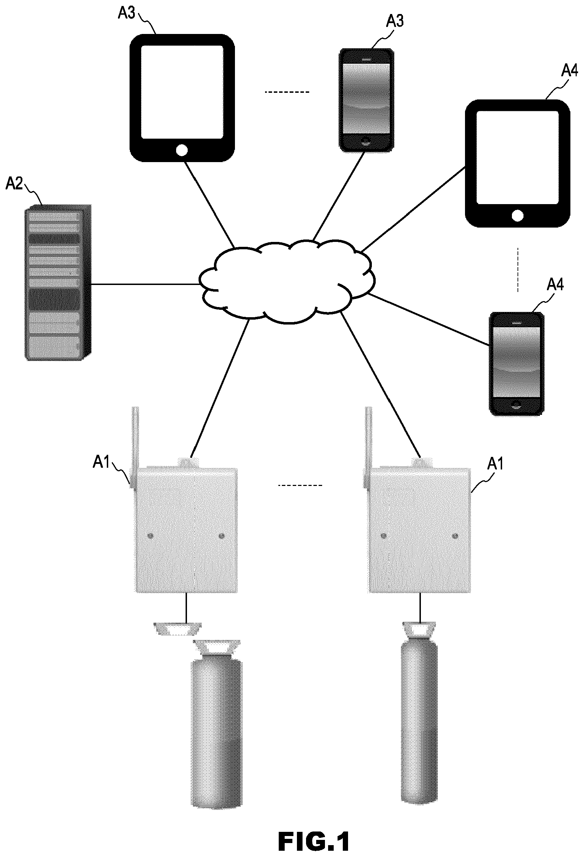

FIG. 1 is a conceptual diagram for an information system A according to the present embodiment. The information system A includes one or more gas information transmission apparatuses A1, an information processing apparatus A2, one or more deliverer terminals A3, and one or more facility terminals A4.

Gas information transmission apparatuses A1 are apparatuses that acquire gas information that includes gas use information, and transmit the gas information to the information processing apparatus A2. The gas information transmission apparatus A1 need only have a communication function, and the type thereof is not limited.

The information processing apparatus A2 is a server apparatus that receives and accumulates information such as gas information. "Information such as gas information" may be gas information alone, or one or more pieces of information of: delivery cylinder information described later; delivery vehicle position information described later; cylinder replacement information described later; and climate information may be used in addition to gas information. The information processing apparatus A2 can be realized using a so-called cloud server or an ASP server, but there is no limitation on the type thereof.

The deliverer terminals A3 are terminals that are used by deliverers. However, the deliverer terminals A3 may be terminals that are mounted on delivery vehicles. The deliverer terminals A3 are, for example, smartphones, tablet terminals, so-called personal computers, or the like, but there is no limitation on the type thereof. The deliverer terminals A3 have a communication function.

The facility terminals A4 are terminals that are present in the facility. The facility terminals A4 are, for example, smartphones, tablet terminals, so-called personal computers, or the like, but there is no limitation on the type thereof. The facility terminals A4 have a communication function. The facility is, for example, a factory or a depot station. A factory is a facility for filling gas cylinders with gas. A depot station is a facility where gas cylinders are placed.

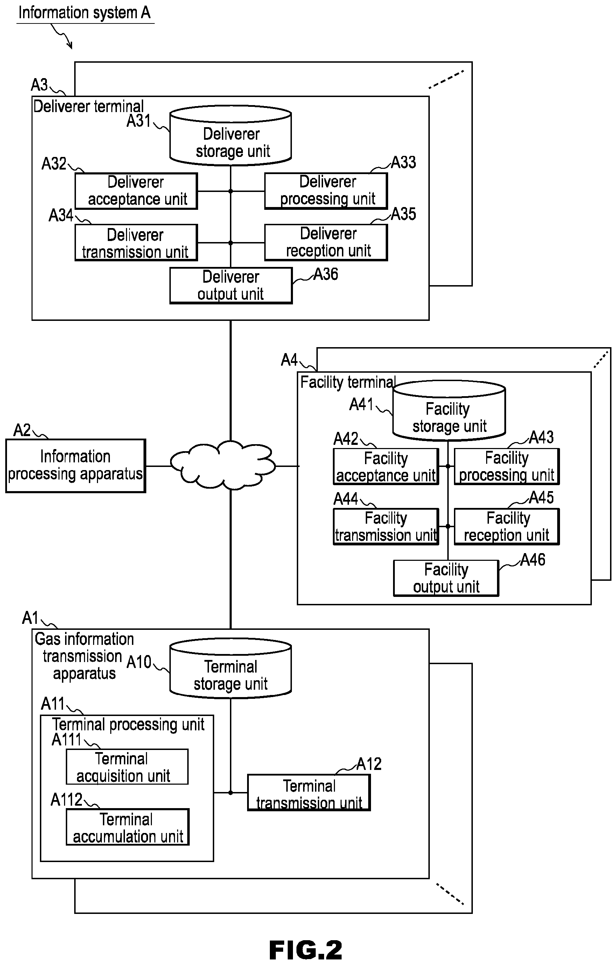

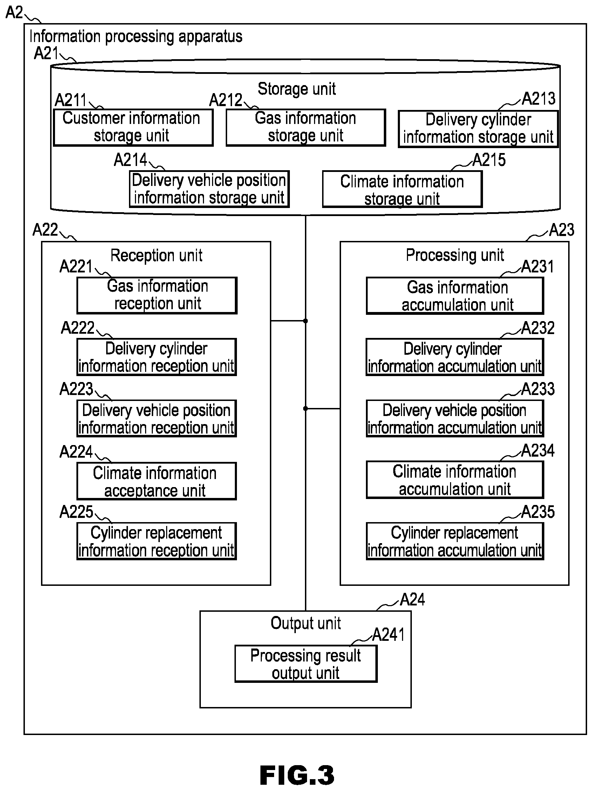

FIG. 2 is a block diagram for the information system A according to the present embodiment. FIG. 3 is a block diagram for the information processing apparatus A2 that is included in the information system A.

The gas information transmission apparatuses A1 includes a terminal storage unit A10, a terminal processing unit A11, and a terminal transmission unit A12. The terminal processing unit A11 includes a terminal acquisition unit A111 and a terminal accumulation unit A112.

The information processing apparatus A2 includes a storage unit A21, a reception unit A22, a processing unit A23, and an output unit A24. The storage unit A21 includes a customer information storage unit A211, a gas information storage unit A212, a delivery cylinder information storage unit A213, a delivery vehicle position information storage unit A214, and a climate information storage unit A215. The reception unit A22 includes a gas information reception unit A221, a delivery cylinder information reception unit A222, a delivery vehicle position information reception unit A223, a climate information acceptance unit A224, and a cylinder replacement information reception unit A225. The processing unit A23 includes a gas information accumulation unit A231, a delivery cylinder information accumulation unit A232, a delivery vehicle position information accumulation unit A233, a climate information accumulation unit A234, and a cylinder replacement information accumulation unit A235. The output unit A24 includes a processing result output unit A241.

Each deliverer terminal A3 includes a deliverer storage unit A31, a deliverer acceptance unit A32, a deliverer processing unit A33, a deliverer transmission unit A34, a deliverer reception unit A35, and a deliverer output unit A36.

Each facility terminal A4 includes a facility storage unit A41, a facility acceptance unit A42, a facility processing unit A43, a facility transmission unit A44, a facility reception unit A45, and a facility output unit A46.

The terminal storage unit A10 included in each gas information transmission apparatus A1 stores various kinds of information. Examples of the various kinds of information include gas information, a customer identifier that identifies a customer, a cylinder identifier that identifies a cylinder, and time information that specifies a time. Time information is, for example, date information that specifies a date, time point information that specifies a date and time, and time zone information that specifies a time zone. When time information is time point information, the time information may be regarded as including date information.

The terminal storage unit A10 stores pieces of gas information as of two or more points in time. Gas information is, for example, information associated with a cylinder identifier, a customer identifier that identifies a customer, and date information that indicates a date. Gas information is associated with time information, for example. Gas information contains, for example, gas use information. Gas use information is information regarding the gas used. Gas information contains, for example, one or more pieces of information of: unit time gas use information; and gas meter reading value information. Unit time gas use information is information that specifies the amount of gas used per unit time. Unit time gas use information is, for example, information that specifies the amount of gas used every one hour. Gas meter reading value information is, for example, information that specifies a gas meter reading value. Gas meter reading value information is, for example, information that specifies gas meter reading values acquired every one hour.

The gas information in the terminal storage unit A10 typically is information accumulated by the terminal accumulation unit A112.

The terminal processing unit A11 performs various kinds of processing. Examples of the various kinds of processing include processing that is performed by the terminal acquisition unit A111 and the terminal accumulation unit A112. Examples of the various kinds of processing include processing that is performed to delete gas information that has been transmitted, from the terminal storage unit A10.

The terminal acquisition unit A111 acquires gas information that is information that includes gas use information regarding the use of gas in an LPG cylinder and corresponds to a cylinder identifier that identifies an LPG cylinder. The terminal acquisition unit A111 acquires, for example, information from a gas meter. The terminal acquisition unit A111 acquires, for example, a meter reading value acquired from a gas meter, and calculates a gas use information that is the difference between the previous meter reading value and the current meter reading value and specifies the amount of gas used per unit time.

It is preferable that the terminal acquisition unit A111 acquires gas use information n times a day (n is 2 or more) every unit time. It is also preferable that the terminal acquisition unit A111 acquires gas use information every one hour.

It is preferable that the terminal acquisition unit A111 acquires time information from a clock (not shown) and associates the time information with the acquired gas use information. Note that the clock (not shown) may be present in the gas information transmission apparatuses A1 or may be a clock of an external apparatus such as an NTP server.

The terminal accumulation unit A112 accumulates the gas information acquired by the terminal acquisition unit A111, in the terminal storage unit A10. It is preferable that the terminal accumulation unit A112 accumulates the gas information acquired by the terminal acquisition unit A111, in the terminal storage unit A10 every unit time. Note that the unit time is, for example, on hour, thirty minutes, two hours, or the like. It is also preferable that the terminal accumulation unit A112 accumulates the gas information acquired by the terminal acquisition unit A111, in the terminal storage unit A10 in association with one or more pieces of information of: a customer identifier, a cylinder identifier, and time information.

The terminal transmission unit A12 transmits the gas information acquired by the terminal acquisition unit A111 to the information processing apparatus A2. The gas information acquired by the terminal acquisition unit A111 may be the gas information stored in the terminal storage unit A10.

The terminal transmission unit A12 transmits, for example, the gas information acquired by the terminal acquisition unit A111 to the information processing apparatus A2 in association with one or more identifiers. The one or more identifiers are, for example, one or more identifiers of: a cylinder identifier; and a cylinder identifier.

It is preferable that the terminal transmission unit A12 transmits gas information as of two or more time points stored in the terminal storage unit A10 to the information processing apparatus A2 when a predetermined condition is satisfied. The predetermined condition is, for example, that a predetermined time is reached, a predetermined number of pieces of gas information are stored in the terminal storage unit A10, or the like. In addition, transmitting gas information in association with a cylinder identifier or the like is, for example, transmitting gas information together with a cylinder identifier or the like, but there is no limitation on the method of associating pieces of information with each other. Note that the cylinder identifier is normally stored in the terminal storage unit A10. It is also preferable that, when the cylinder to be used is changed to another cylinder, the cylinder identifier of the other cylinder is automatically stored in the terminal storage unit A10.

Here, the transmission of gas information as of two or more time points may mean the transmission of two or more information sets that each consists of a piece of gas information and a piece of time information, or the transmission of two or more pieces of gas information arranged in chronological order.

In addition, the transmission of gas information for one day may mean the transmission of twenty-four information sets that each consists of gas information and time information, or the transmission of twenty-four pieces of gas information arranged in chronological.

Note that one piece of gas information is information that contains one piece of gas use information, but one piece of gas information may be information that contains a plurality of pieces of gas use information.

It is preferable that the terminal transmission unit A12 transmits two or more pieces of gas information in the terminal storage unit A10 to the information processing apparatus A2 less than n times a day.

It is preferable that the terminal transmission unit A12 transmits gas information to the information processing apparatus A2 once a day. Note that there is no limitation on the time at which the terminal transmission unit A12 transmits gas information.

The terminal transmission unit A12 may transmit gas information at different time points depending on a condition. That is, for example, the terminal transmission unit A12 may normally transmit a plurality of pieces of gas information to the information processing apparatus A2 at a low frequency (a first frequency), and when a predetermined condition is satisfied, the terminal transmission unit A12 may transmit gas information to the information processing apparatus A2 at a higher frequency (a second frequency) than the frequency in the normal case. The predetermined condition here is, for example, that the terminal processing unit A11 determines that the amount of gas that has been used is large enough to satisfy the predetermined condition (for example, an amount of gas no less than or greater than a threshold value has been used). Alternatively, the predetermined condition is, for example, that the terminal processing unit A11 determines that a small amount of gas has been used for a period that is long enough to satisfy the predetermined condition (for example, an amount of gas no greater than or less than a threshold value has been used for a period no less than a first threshold value).

It is also preferable that, after the terminal transmission unit A12 has transmitted gas information to the information processing apparatus A2, the terminal processing unit A11 deletes the transmitted gas information from the terminal storage unit A10.

The storage unit A21 included in the information processing apparatus A2 stores various kinds of information. Examples of the various kinds of information include customer information described later, gas information, delivery cylinder information described later, delivery vehicle position information described later, and climate information described later.

The customer information storage unit A211 stores one or more pieces of customer information each in association with a customer identifier. Customer information is information regarding a customer. Customer information contains, for example, a name, customer position information, and contact information. Customer position information is information that specifies the position of a customer. Customer position information is, for example, (latitude,longitude), address, or the like. Contact information is information that specifies a point of contact, and is, for example, an e-mail address or a telephone number. date information contains, for example, date information that specifies the date on which the gas cylinder was replaced. The customer information contains, for example, cylinder type information, cylinder number information, and gas remaining amount information. Cylinder type information is information that specifies the type of the cylinder used by the customer. The cylinder number information is information that specifies the number of cylinders installed in the customer's home. Gas remaining amount information is information that specifies the amount of gas remaining in the customer's gas cylinders. Customer information contains, for example, one or more medium identifiers that identify the medium used by the customer (for example, "LPG" and "electricity"), one or more appliance identifiers of energy appliances owned by the customer (for example, "gas appliance A", "electric appliance B", and "appliance C"), and one or more company identifiers that identify the energy companies with which the customer has a contract (for example, "company A"). Customer information may contain, for example, LPG cylinder information that contains cylinder capacity information regarding the capacity of the LPG cylinder used by the customer. Note that LPG cylinder information may be cylinder type information.

The gas information storage unit A212 stores one or more pieces of gas information. The gas information storage unit A212 normally stores two or more pieces of gas information associated with customer identifiers. It is preferable that the pieces of gas information are associated with one or more pieces of information of: time information that specifies a time; and a cylinder identifier. In addition, here, the association with time information and cylinder identifier may be realized by storing gas information so that time information and a cylinder identifier can be known.

The delivery cylinder information storage unit A213 stores one or more pieces of delivery cylinder information. Delivery cylinder information is information regarding a cylinder that is to be delivered. Delivery cylinder information contains, for example, cylinder type information and cylinder state information. Delivery cylinder information typically is information from which the number of cylinders can be known. That is to say, delivery cylinder information may contain number information that specifies the number of cylinders, or the number of pieces of delivery cylinder information that have been received may indicate the number of cylinders. Cylinder type information is information that specifies the type of the cylinder, and indicates, for example, 20 Kg, 30 Kg, or 50 Kg. Cylinder state information is information that indicates whether or not the cylinder is full. Delivery cylinder information corresponds to, for example, one or more pieces of information of: a cylinder identifier; a delivery vehicle identifier; a deliverer identifier; and time information that specifies entry/exit date and time. Note that the entry/exit date and time is an entry date and time or an exit date and time to/from a factory where the cylinder is to be filled with gas, or entry date and time or an exit date and time to/from a depot station where cylinders are stored. Alternatively, time point information may be information that only specifies a date.

The delivery vehicle position information storage unit A214 stores one or more pieces of delivery vehicle position information. Delivery vehicle position information is information that specifies the position of a delivery vehicle. Delivery vehicle position information is, for example, (latitude,longitude), but may be, for example, a facility identifier that identifies the nearest facility. The facility is, for example, a factory or a depot station. Delivery vehicle position information is associated with, for example, a delivery vehicle identifier that identifies the delivery vehicle for the cylinder, or a deliverer identifier.

The climate information storage unit A215 stores one or more pieces of climate information. Climate information is information regarding weather. Climate information is, for example, one or more pieces of information of: weather; temperature; humidity; and so on. It is preferable that climate information is associated with time information. Time information is, for example, date information and time point information.

The reception unit A22 receives various kinds of information. Examples of the various kinds of information include gas information, delivery cylinder information, delivery vehicle position information, climate information, and cylinder replacement information.

The gas information reception unit A221 receives one or more pieces of gas information from the gas information transmission apparatuses A1. The gas information reception unit A221 receives, for example, gas information associated with one or more identifiers of: a customer identifier; and a cylinder identifier, from the gas information transmission apparatuses A1.

The delivery cylinder information reception unit A222 receives one or more pieces of delivery cylinder information. The delivery cylinder information reception unit A222 receives delivery cylinder information in association with one or more pieces of information of: a cylinder identifier; a delivery vehicle identifier; and a deliverer identifier, for example. The delivery cylinder information reception unit A222 receives delivery cylinder information in association with a loading platform identifier, for example. The loading platform identifier is information that specifies a loading platform loading platform on which the cylinder is placed. The delivery cylinder information reception unit A222 receives delivery cylinder information in association with time point information that identifies entry/exit date and time, for example. The entry/exit date and time is the date and time of entry/exit to/from a facility. The delivery cylinder information reception unit A222 receive delivery cylinder information from the facility terminals A4, for example. The delivery cylinder information reception unit A222 receive delivery cylinder information from the deliverer terminals A3, for example. Note that there is no limitation on the source of delivery cylinder information. The cylinder identifier is, for example, information stored in a communication means (for example, an RFID tag) installed in a cylinder that is to be delivered, and indirectly or directly received from such a communication means. The cylinder identifier may be, for example, information input to a facility terminal A4 by a user and transmitted from the facility terminal A4. The delivery vehicle identifier is, for example, information stored in a communication means (for example, an RFID tag) installed in a delivery vehicle itself (for example, a trailer head), and indirectly or directly received from such a communication means. Note that, in such a case, the delivery vehicle identifier may be referred to as a trailer head identifier. In addition, the delivery vehicle identifier and the trailer head identifier may be different pieces of information, and in such a case, the delivery cylinder information reception unit A222 may receive delivery cylinder information in association with the trailer head identifier. In addition, the deliverer identifier is, for example, information indirectly or directly received from a deliverer terminal A3 held by a deliverer. The deliverer identifier may be, for example, information stored in a communication means installed in a delivery vehicle itself (for example, a trailer head), and indirectly or directly received from such a communication means. Furthermore, the loading platform identifier is, for example, information stored in a communication means (for example, an RFID tag) installed in a loading platform of a delivery vehicle, and indirectly or directly received from such a communication means.

The delivery vehicle position information reception unit A223 receives one or more pieces of delivery vehicle position information. The delivery vehicle position information reception unit A223 normally receives delivery vehicle position information from the deliverer terminals A3 that are terminals on delivery vehicles, but there is no limitation on the source of delivery vehicle position information. Note that the deliverer terminals A3 may be terminals that are different from the terminals held by deliverers, and may be terminals mounted on delivery vehicles.

The delivery vehicle position information reception unit A223 normally receives delivery vehicle position information in association with a delivery vehicle identifier that identifies a delivery vehicle. However, the delivery vehicle position information reception unit A223 may receive delivery vehicle position information in association with a deliverer identifier. Also, delivery vehicle identifier and deliverer identifier may be the same information.

The climate information acceptance unit A224 receives one or more pieces of climate information. Here, "acceptance" means, for example, reception from a server apparatus (not shown), but may be regarded as a concept that includes acceptance of information input from an input device such as a keyboard, a mouse, or a touch panel, or acceptance of information read from a recording medium such as an optical disk, a magnetic disk, or a semiconductor memory. Note that the server apparatus (not shown) is an apparatus that stores climate information.

The cylinder replacement information reception unit A225 receives one or more pieces of cylinder replacement information. Cylinder replacement information is information that indicates that a cylinder has been replaced. The cylinder replacement information reception unit A225 receives cylinder replacement information that is paired with one or more pieces of information of: a customer identifier; and a cylinder identifier, for example. The cylinder replacement information reception unit A225 receives, for example, cylinder replacement information from a deliverer terminal A. Note that there is no limitation on the transmission source of cylinder replacement information.

The processing unit A23 performs predetermined processing, using two or more pieces of gas information stored in the gas information storage unit A212. Examples of the predetermined processing include delivery date prediction processing described later, delivery control processing described later, futures trading processing described later, residence stay processing described later, energy optimum plan presentation processing described later, household credit rating acquisition processing described later, statistical processing, and so on. statistical processing is statistical processing to be performed on a plurality of pieces of gas information. Examples of statistical processing includes processing that is performed to calculate the average amount of gas used by a household for a certain period from a plurality of pieces of gas information, processing that is performed to calculate the cumulative value of the amount of gas used for a certain period, and processing that is performed to acquire a graph showing changes in the amount of gas used. Note that delivery date prediction processing, delivery control processing, futures trading processing, residence stay processing, energy optimum plan presentation processing, and household credit rating acquisition processing will be described in Embodiment 2 and the subsequent embodiments. Note that delivery date prediction processing is processing that is performed to predict the delivery date on which a gas cylinder is to be delivered to household. Delivery control processing is processing that is performed to deliver a gas cylinder to a household that has run out of gas, for example. Futures trading processing is processing that is performed to determine the price of gas and supporting futures trading. Residence stay processing is processing that is performed to output information regarding whether or not an inhabitant is present in a residence. Energy optimum plan presentation processing is processing that is performed to present an appropriate energy plan. Household credit rating acquisition processing is processing that is performed to acquire and output a credit rating of a household.

The processing unit A23 performs predetermined processing, also using one or more pieces of delivery cylinder information stored in the delivery cylinder information storage unit A213, for example. The predetermined processing is, for example, delivery control processing.

The processing unit A23 performs the predetermined processing, using one or more pieces of delivery vehicle position information stored in the delivery vehicle position information storage unit A214, for example. The predetermined processing is, for example, delivery control processing.

The processing unit A23 performs the predetermined processing, using one or more pieces of climate information stored in the climate information storage unit A215. Examples of the predetermined processing include delivery date prediction processing, futures trading processing, and energy optimum plan presentation processing.

The gas information accumulation unit A231 accumulates the one or more pieces of gas information received by the gas information reception unit A221, in the gas information storage unit A212. The gas information accumulation unit A231 accumulates each piece of gas information received by the gas information reception unit A221, in the gas information storage unit A212, in association with one or more pieces of information of: time information; a customer identifier; and a cylinder identifier. Note that such time information may be information received from the gas information transmission apparatuses A1, or information acquired from a clock (not shown).

The delivery cylinder information accumulation unit A232 accumulates the one or more pieces of delivery cylinder information received by the delivery cylinder information reception unit A222, in the delivery cylinder information storage unit A213. The delivery cylinder information accumulation unit A232 accumulates each piece of delivery cylinder information in the delivery cylinder information storage unit A213 in association with one or more pieces of information of: a cylinder identifier; a delivery vehicle identifier; and a deliverer identifier, for example.

The delivery vehicle position information accumulation unit A233 accumulates the one or more pieces of delivery vehicle position information received by the delivery vehicle position information reception unit A223, in the delivery vehicle position information storage unit A214. The delivery vehicle position information accumulation unit A233 accumulates each piece of delivery vehicle position information in the delivery vehicle position information storage unit A214 in association with a delivery vehicle identifier or a deliverer identifier.

The climate information accumulation unit A234 accumulates one or more pieces of climate information, in the climate information storage unit A215. The climate information accumulation unit A234 normally each piece of climate information in the climate information storage unit A215 in association with time information. Note that time information may be information received by the reception unit A22 or may be acquired from a clock (not shown). In addition, time information may be date information or time point information.

When the cylinder replacement information reception unit A225 receives cylinder replacement information, the cylinder replacement information accumulation unit A235 updates the gas remaining amount information contained in the gas information paired with one or more pieces of information of: a customer identifier; and a cylinder identifier, to information that specifies that the amount of gas remaining is full.

The deliverer storage unit A31 included in each deliverer terminal A3 stores various kinds of information. Examples of the various kinds of information include a deliverer identifier that identifies a deliverer. Examples of the various kinds of information include a delivery vehicle identifier that identifies a delivery vehicle. The deliverer identifier and the delivery vehicle identifier may be the same information. Examples of the various kinds of information include cylinder replacement information. Cylinder replacement information is information that indicates that a cylinder has been replaced. Cylinder replacement information is associated with one or more identifiers of: a customer identifier; and a cylinder identifier.

The deliverer acceptance unit A32 accepts various instructions and various kinds of information. Examples of the various instructions and various kinds of information include cylinder replacement information. Examples of the various instructions and various kinds of information include cylinder replacement information and one or more identifiers of: a customer identifier; and a cylinder identifier. When a cylinder of a certain household is to be replaced or has been replaced, the deliverer inputs cylinder exchange information to the deliverer terminal A3. In addition, cylinder replacement information may be input by pressing a button, or may be input by inputting information in a field, for example.

It is preferable that the deliverer inputs one or more identifiers of: a customer identifier; and a cylinder identifier together with cylinder replacement information. In such a case, the deliverer acceptance unit A32 accepts cylinder replacement information, and one or more identifiers of: a customer identifier; and a cylinder identifier.

Any input means may be employed to input cylinder replacement information, such as a touch panel, a keyboard, a mouse, a menu screen, or the like. The deliverer acceptance unit A32 can be realized using a device driver for the input means such as a touch panel or a keyboard, or control software or the like for controlling the menu screen.

The deliverer processing unit A33 performs various kinds of processing. Examples of the various kinds of information include processing that is performed to convert the information accepted by the deliverer acceptance unit A32 so as to have a data structure of information to be transmitted. Examples of the various kinds of processing include processing that is performed when the deliverer acceptance unit A32 accepts cylinder replacement information, to form information in which the cylinder replacement information, the deliverer identifier in the deliverer storage unit A31, and one or more identifiers of: the customer identifier; and the cylinder identifier, which have been input, are associated with each other. Examples of the various kinds of information include processing that is performed to convert the information received by the deliverer reception unit A35 so as to have a data structure of information that is to be output.

The deliverer transmission unit A34 transmits cylinder replacement information to the information processing apparatus A2. The deliverer transmission unit A34 normally transmits cylinder replacement information that is associated with one or more identifiers of: a customer identifier; and a cylinder identifier, to the information processing apparatus A2. It is preferable that the deliverer transmission unit A34 transmits a deliverer identifier as well as cylinder replacement information.

The deliverer reception unit A35 receives various kinds of information. The deliverer reception unit A35 receives various kinds of information from the information processing apparatus A2, for example. The deliverer reception unit A35 receives customer information described later, from the information processing apparatus A2, for example. Note that customer information is information regarding a customer, and is information paired with a customer identifier. The customer information received by the deliverer reception unit A35 is information regarding the customer to which a gas cylinder is to be delivered, for example. Note that the customer identifier may be contained in customer information.

The deliverer output unit A36 outputs various kinds of information. Examples of the various kinds of information include information formed by the deliverer processing unit A33. Examples of the various kinds of information include customer information. Customer information is information regarding the customer to which a gas cylinder is to be delivered. It is preferable that customer information contains one or more pieces of information of: a customer identifier; customer position information; and information regarding the gas cylinder to be delivered. Customer position information is information that specifies the position of a customer. Customer position information is, for example, (latitude,longitude), address, or the like. Information regarding the gas cylinder to be delivered is, for example, cylinder type information that specifies the type of a gas cylinder, the number of gas cylinders, and so on.

Here, "output" typically means displaying on a display device, but may be regarded as a concept that includes projection with a projector, printing with a printer, sound output, transmission to an external apparatus, accumulation on a recording medium, delivery of processing results to another processing apparatus or another program, and so on.

The facility storage unit A41 included in each facility terminal A4 stores various kinds of information. Examples of the various kinds of information include a facility identifier that identifies a facility. It is preferable that the facility storage unit A41 stores delivery cylinder information that is information received by a terminal in a delivery vehicle, (for example, an RFID) and is information regarding a cylinder mounted on the delivery vehicle. Delivery cylinder information is associated with a cylinder identifier. It is preferable that delivery cylinder information is associated with a loading platform identifier and entry/exit date and time, for example. Delivery cylinder information contains, for example, cylinder type information and cylinder state information. It is preferable that delivery cylinder information contains information that specifies the number of cylinders to be delivered.

The facility acceptance unit A42 accepts various instructions and various kinds of information.

The facility processing unit A43 performs various kinds of processing. Examples of the various kinds of processing include processing that is performed to accumulate information received by the facility reception unit A45. The facility processing unit A43 at least temporarily accumulates the delivery cylinder information and identifiers received by the facility reception unit A45, in the facility storage unit A41. Note that examples of the identifiers include one or more identifiers of: a cylinder identifier; a loading platform identifier; a delivery vehicle identifier; and a deliverer identifier.

The facility transmission unit A44 transmits various kinds of information. The facility transmission unit A44 transmits, for example, various kinds of information to the information processing apparatus A2. The facility transmission unit A44 transmits delivery cylinder information in association with identifiers, for example. Examples of the identifiers include one or more identifiers of: a cylinder identifier; a loading platform identifier; a delivery vehicle identifier; and a deliverer identifier.

The facility reception unit A45 receives various kinds of information. The facility reception unit A45 receives, for example, various kinds of information from a terminal of a delivery vehicle (for example, an RFID). The facility reception unit A45 receives delivery cylinder information in association with identifiers, for example. Examples of the identifiers include one or more identifiers of: a cylinder identifier; a loading platform identifier; a delivery vehicle identifier; and a deliverer identifier.

The facility output unit A46 outputs various kinds of information.

It is preferable that the terminal storage unit A10, the storage unit A21, the customer information storage unit A211, the gas information storage unit A212, the delivery cylinder information storage unit A213, the delivery vehicle position information storage unit A214, the climate information storage unit A215, the deliverer storage unit A31, and the facility storage unit A41 are realized using a non-volatile recording medium, but they can be realized using a volatile recording medium.

There is no limitation on the process in which information is stored in the terminal storage unit A10 and so on. For example, information may be stored in the terminal storage unit A10 or the like via a recording medium, or information transmitted via a communication line or the like may be stored in the terminal storage unit A10 or the like, or information input via an input device may be stored in the terminal storage unit A10 or the like.

The terminal processing unit A11, the terminal acquisition unit A111, the terminal accumulation unit A112, the processing unit A23, the gas information accumulation unit A231, the delivery cylinder information accumulation unit A232, the delivery vehicle position information accumulation unit A233, the climate information accumulation unit A234, the cylinder replacement information accumulation unit A235, the deliverer processing unit A33, and the facility processing unit A43 can typically be realized using an MPU, a memory, or the like. The processing procedures performed by the terminal processing unit A11 and so on typically are realized using software, and the software is recorded on a recording medium such as a ROM. However, such processing procedures may be realized using hardware (a dedicated circuit). Needless to say, a CPU or a GPU may be used instead of the MPU.

The terminal transmission unit A12, the output unit A24, processing result output unit A241, the deliverer transmission unit A34, and the facility transmission unit A44 typically are realized using a wireless or wired communication means, but may be realized using a broadcast means.

The reception unit A22, the gas information reception unit A221, the delivery cylinder information reception unit A222, the delivery vehicle position information reception unit A223, the climate information acceptance unit A224, the cylinder replacement information reception unit A225, the deliverer reception unit A35, and the facility reception unit A45 typically are realized using a wireless or wired communication means, but may be realized using a means for receiving broadcast.

The deliverer acceptance unit A32 and the facility acceptance unit A42 can be realized using a touch panel, a keyboard, a mouse, a menu screen, or the like.

The deliverer output unit A36 and the facility output unit A46 may be regarded as including or not including an output device such as a display or a speaker. The deliverer output unit A36 and so on can be realized using the driver software of the output device, the driver software of the output device and the output device, or the like.

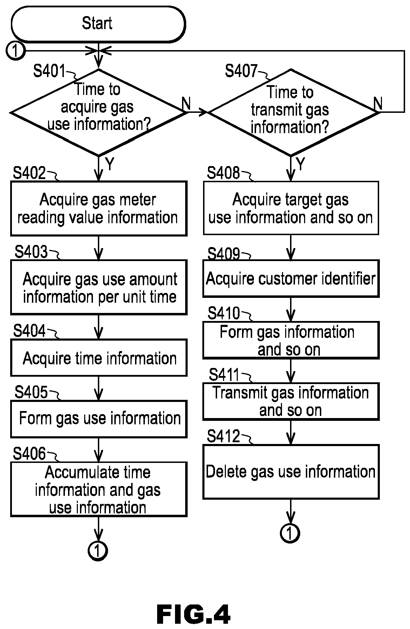

Next, operations that are performed by the information system A will be described. First, examples of operations that are performed by the gas information transmission apparatus A1 will be described with reference to the flowchart shown in FIG. 4.

(Step S401) The terminal processing unit A11 determines whether or not it is the time to acquire gas use information. If it is the time to acquire gas use information, processing proceeds to step S402, and if it is not the time to acquire gas use information, processing proceeds to step S407. For example, when acquiring gas use information every one hour, the terminal processing unit A11 acquires time information from a clock (not shown), and if the time indicated by the time information matches "X hour 00 minutes" (X is a natural number in the range of 1 to 24), the terminal processing unit A11 determines that it is the time to acquire gas use information.

(Step S402) The terminal acquisition unit A111 acquires gas meter reading value information from a gas meter (not shown). Noted that such a technique is a well-known technique. Note that the gas meter typically is an LP gas meter, and is a device that holds the gas meter reading value that indicates the flow rate integration measured from the installation of the device.

(Step S403) The terminal acquisition unit A111 calculates information indicating gas use amount per unit time, which is the difference between the previously acquired gas meter reading value information and the gas meter reading value information currently acquired in step S402. Note that the terminal acquisition unit A111 acquires the information indicating the gas use amount per unit time by calculating, for example, "information indicating the gas use amount per unit time = the previously acquired gas meter reading value information - the gas meter reading value information acquired in step S402".

(Step S404) The terminal acquisition unit A111 acquires time information that indicates the current time from a clock (not shown).

(Step S405) The terminal acquisition unit A111 forms gas use information to be accumulated, using the information indicating the gas use amount per unit time, acquired in step S403.

(Step S406) The terminal accumulation unit A112 accumulates the time information acquired in step S404 and the gas use information formed in step S405 in association with each other. Processing returns to step S401. Note that the location where the gas use information or the like is to be accumulated typically is the terminal storage unit A10. Note that the terminal accumulation unit A112 may accumulate gas use information in association with a cylinder identifier. In such a case, the terminal acquisition unit A111 acquires the cylinder identifier as well.

(Step S407) The terminal processing unit A11 determines whether or not it is the time to transmit gas information. If it is the time to transmit gas information, processing proceeds to step S408, and if it is not the time to transmit gas information, processing returns to step S401. For example, when transmitting gas information once a day, the terminal processing unit A11 acquires time information from a clock (not shown), and upon determining that the time indicated by the time information has passed a predetermined time (for example, "24:01"), the terminal processing unit A11 determines that it is the time to transmit gas information. Note that even if it is determined that the predetermined time has passed, the gas information that has already been transmitted is usually not transmitted again. Also, even if the terminal processing unit A11 determines that the predetermined time has passed, the terminal processing unit A11 usually does not determine that it is the time to transmit gas information until a predetermined period (for example, one day) elapses.

(Step S408) The terminal processing unit A11 acquires gas use information and so on to be transmitted, from the terminal storage unit A10. The gas use information and so on are, for example, a set of pieces of information composed of gas use information and time information, gas use information alone, gas use information and a cylinder identifier, or a set of pieces of information composed of gas use information, a cylinder identifier, and time information.

(Step S409) The terminal processing unit A11 acquires a customer identifier from the terminal storage unit A10.

(Step S410) The terminal processing unit A11 forms gas information and so on to be transmitted. Gas information contains, for example, a plurality of pieces of gas use information and so on and one or more identifiers. The one or more identifiers are, for example, one or more pieces of information of: a customer identifier; and a cylinder identifier.

(Step S411) The terminal transmission unit A12 transmits the gas information and so on formed in step S410 to the information processing apparatus A2.

(Step S412) The terminal processing unit A11 deletes the transmitted gas use information and so on. Here, a flag indicating that the information has been transmitted may be accumulated in association with the transmitted gas use information and so on. Such addition of a flag may be regarded as the same as the deletion. Processing returns to step S401.

In the flowchart shown in FIG. 4, the number of times gas use information is accumulated is larger than the number of times gas information is transmitted. That is to say, in the flowchart shown in FIG. 4, a plurality of pieces of gas use information are transmitted to the information processing apparatus A2 all at once. As a result, the power consumption of the gas information transmission apparatus A1 can be reduced, and the frequency of battery replacement of the gas information transmission apparatus A1 can be reduced. However, in the flowchart shown in FIG. 4, gas information may be transmitted each time gas use information is acquired.

Also, in the flowchart shown in FIG. 4, the terminal transmission unit A12 may transmit gas information to the information processing apparatus A2 at different frequencies in a case where a predetermined condition is satisfied and in a case where the predetermined condition is not satisfied. Here, the predetermined condition is, for example, that the terminal processing unit A11 determines that the amount of gas that has been used is large enough to satisfy the predetermined condition.

In the flowchart shown in FIG. 4, processing is terminated when power is turned off or an interruption is made to terminate the processing.

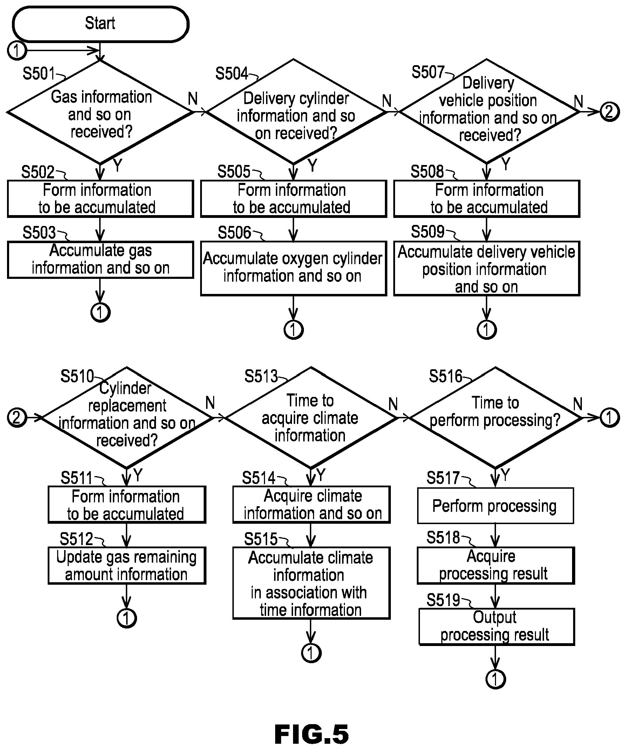

Next, examples of operations that are performed by the information processing apparatus A2 will be described with reference to the flowchart shown in FIG. 5.

(Step S501) The gas information reception unit A221 determines whether or not gas information and so on transmitted from the gas information transmission apparatuses A1 have been received. If gas information and so on have been received, processing proceeds to step S502, and if gas information and so on have not been received, processing proceeds to step S504. Gas information and so on are, for example, gas information and one or more identifiers. The one or more identifiers are, for example, one or more pieces of information of: a customer identifier; and a cylinder identifier.

(Step S502) The gas information accumulation unit A231 forms gas information and so on to be accumulated, using the gas information and so on received in step S501.

(Step S503) The gas information accumulation unit A231 accumulates the gas information and so on formed in step S502 in the gas information storage unit A212. Processing returns to step S501.

(Step S504) The delivery cylinder information reception unit A222 determines whether or not delivery cylinder information and so on have been received. If delivery cylinder information and so on have been received, processing proceeds to step S505, and if delivery cylinder information and so on have not been received, processing proceeds to step S507. Delivery cylinder information and so on are, for example, delivery cylinder information and one or more identifiers. The one or more identifiers are, for example, one or more pieces of information of: a cylinder identifier; a deliverer identifier; and a delivery vehicle identifier.

(Step S505) The delivery cylinder information accumulation unit A232 forms delivery cylinder information and so on to be accumulated, using the delivery cylinder information and so on received in step S504.

(Step S506) The delivery cylinder information accumulation unit A232 accumulates the delivery cylinder information and so on formed in step S505, in the delivery cylinder information storage unit A213. Processing returns to step S501.

(Step S507) The delivery vehicle position information reception unit A223 determines whether or not delivery vehicle position information and so on have been received. If delivery vehicle position information and so on have been received, processing proceeds to step S508, and if delivery vehicle position information and so on have not been received, processing proceeds to step S510. Delivery vehicle position information and so on are, for example, delivery vehicle position information and one or more identifiers. The one or more identifiers are, for example, one or more pieces of information of: a deliverer identifier; and a delivery vehicle identifier.

(Step S508) The delivery vehicle position information accumulation unit A233 forms delivery vehicle position information and so on to be accumulated, using the delivery vehicle position information and so on received in step S507.

(Step S509) The delivery vehicle position information accumulation unit A233 accumulates the delivery vehicle position information and so on formed in step S508, in the delivery vehicle position information storage unit A214. Processing returns to step S501.

(Step S510) Cylinder replacement information reception unit A225 determines whether or not cylinder replacement information and so on have been received. If cylinder replacement information and so on have been received, processing proceeds to step S511, and if cylinder replacement information and so on have not been received, processing proceeds to step S513. Cylinder replacement information and so on are, for example, cylinder replacement information and one or more identifiers. The one or more identifiers are, for example, one or more pieces of information of: a customer identifier; and a cylinder identifier.

(Step S511) The cylinder replacement information accumulation unit A235 forms cylinder replacement information and so on to be accumulated, using the cylinder replacement information and so on received in step S510.

(Step S512) The cylinder replacement information accumulation unit A235 updates the gas remaining amount information regarding the customer information storage unit A211, using the cylinder replacement information and so on formed in step S511. Processing returns to step S501.

(Step S513) The processing unit A23 determines whether or not it is the time to acquire climate information. If it is the time to acquire climate information, processing proceeds to step S514, and if it is not the time to acquire climate information, processing proceeds to step S516. Note that the time to acquire climate information is, for example, every one hour, every one day, or the like.

(Step S514) The climate information acceptance unit A224 acquires climate information and so on from a server (not shown). Here, the climate information acceptance unit A224 may acquire climate information and so on regarding two or more regions, for example.

(Step S515) The climate information accumulation unit A234 accumulates the climate information and so on acquired in step S514 in association with time information, in the climate information storage unit A215. Processing returns to step S501. Climate information and so on are, for example, climate information and time information. The climate information accumulation unit A234 may accumulate climate information and so on in association with time information and a region identifier that identifies a region, in the climate information storage unit A215.

(Step S516) The processing unit A23 determines whether or not it is the time to perform processing, using gas information. If it is the time to perform processing, processing proceeds to step S517, and if it is not the time to perform processing, processing returns to step S501.

(Step S517) The processing unit A23 preforms predetermined processing. Examples of predetermined processing include delivery date prediction processing, delivery control processing, futures trading processing, residence stay processing, energy optimum plan presentation processing, household credit rating acquisition processing, and statistical processing.

(Step S518) The processing unit A23 acquires a processing result that is information that specifies the result of processing performed in step S517.

(Step S519) The processing result output unit A241 outputs the processing result acquired in step S518. Processing returns to step S501.

In the flowchart shown in FIG. 5, processing is terminated when power is turned off or an interruption is made to terminate the processing.

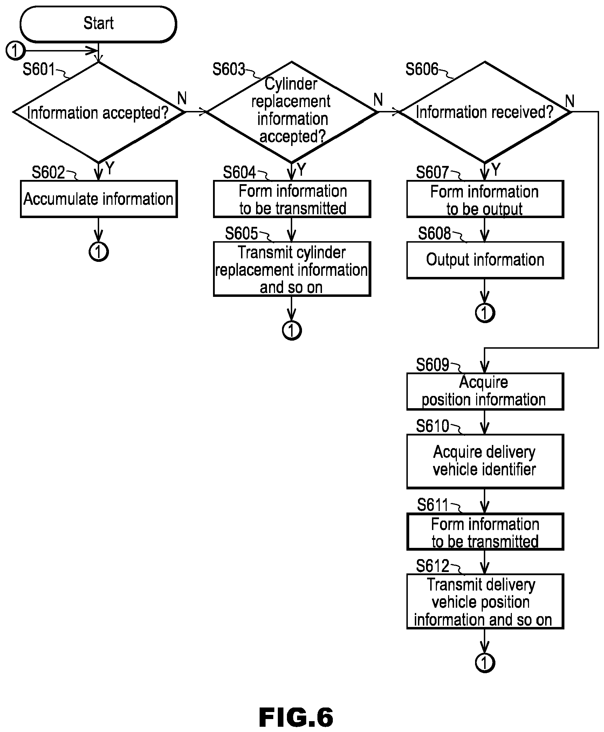

Next, examples of operations that are performed by each deliverer terminal A3 will be described with reference to the flowchart shown in FIG. 6.

(Step S601) The deliverer acceptance unit A32 determines whether or not information has been accepted. If information has been accepted, processing proceeds to step S602, and if information has not been accepted, processing proceeds to step S603. Examples of information include a customer identifier and a cylinder identifier.

(Step S602) The deliverer processing unit A33 at least temporarily accumulate the information accepted in step S601, in the deliverer storage unit A31. Processing returns to step S601.

(Step S603) The deliverer acceptance unit A32 determines whether or not cylinder replacement information has been accepted. If cylinder replacement information has been accepted, processing proceeds to step S604, and if cylinder replacement information has not been accepted, processing proceeds to step S606.

(Step S604) The deliverer processing unit A33 forms cylinder replacement information and so on to be transmitted. Cylinder replacement information and so on contain, for example, a customer identifier and a cylinder identifier.

(Step S605) The deliverer transmission unit A34 transmits the cylinder replacement information and so on formed in step S604 to the information processing apparatus A2. Processing returns to step S601.

(Step S606) The deliverer reception unit A35 determines whether or not information has been received. If information has been received, processing proceeds to step S607, and if information has not been received, processing proceeds to step S609. Note that examples of information include customer information and a delivery list. The delivery list is information regarding a list of customers to which the deliverer delivers gas cylinders.

(Step S607) The deliverer processing unit A33 forms information that is to be output, using the information received in step S606. Examples of information that is to be output include customer information, a delivery list, a map that explicitly shows the position specified by the customer position information contained in the customer information, and route information that is the result of a search for a route from the position specified by delivery vehicle position information to the position specified by the customer position information. Note that the deliverer processing unit A33 may have the function of acquiring delivery vehicle position information (for example, the function of a GPS receiver) and a route search function.

(Step S608) The deliverer output unit A36 outputs the information formed in step S607. Processing returns to step S601.

(Step S609) The deliverer processing unit A33 acquires position information regarding the delivery vehicle. Note that when the deliverer processing unit A33 acquires position information, the deliverer processing unit A33 typically has a GPS receiver, but may use another means to acquire position information. The other means uses, for example, the strength of radio waves transmitted from three or more radio base stations, to perform processing, for example.

(Step S610) The deliverer processing unit A33 acquires a delivery vehicle identifier from the deliverer storage unit A31.

(Step S611) The deliverer processing unit A33 forms delivery vehicle position information and so on to be transmitted, using the delivery vehicle position information acquired in step S609 and the delivery vehicle identifier acquired in step S610.

(Step S612) The deliverer transmission unit A34 transmits the delivery vehicle position information and so on formed in step S611 to the information processing apparatus A2. Processing returns to step S601.

Note that there is no limitation on the time at which the delivery vehicle position information is transmitted in the flowchart shown in FIG. 6.

In the flowchart shown in FIG. 6, processing is terminated when power is turned off or an interruption is made to terminate the processing.

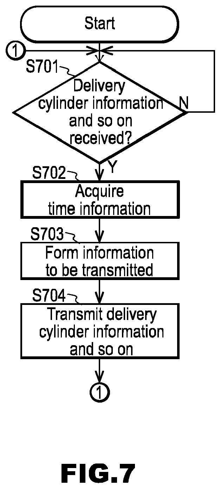

Next, examples of operations that are performed by each facility terminal A4 will be described with reference to the flowchart shown in FIG. 7.

(Step S701) The facility reception unit A45 determines whether or not delivery cylinder information and so on have been received. If delivery cylinder information and so on have been received, processing proceeds to step S702, and if delivery cylinder information and so on have not been received, processing returns to step S701.

(Step S702) The facility processing unit A43 acquires time information from a clock (not shown).

(Step S703) The facility processing unit A43 forms delivery cylinder information and so on to be transmitted, using the delivery cylinder information and so on received in step S701 and the time information acquired in step S702.

(Step S704) The facility transmission unit A44 transmits the delivery cylinder information and so on formed in step S703 to the information processing apparatus A2. Processing returns to step S701.

In the flowchart shown in FIG. 7, processing is terminated when power is turned off or an interruption is made to terminate the processing.

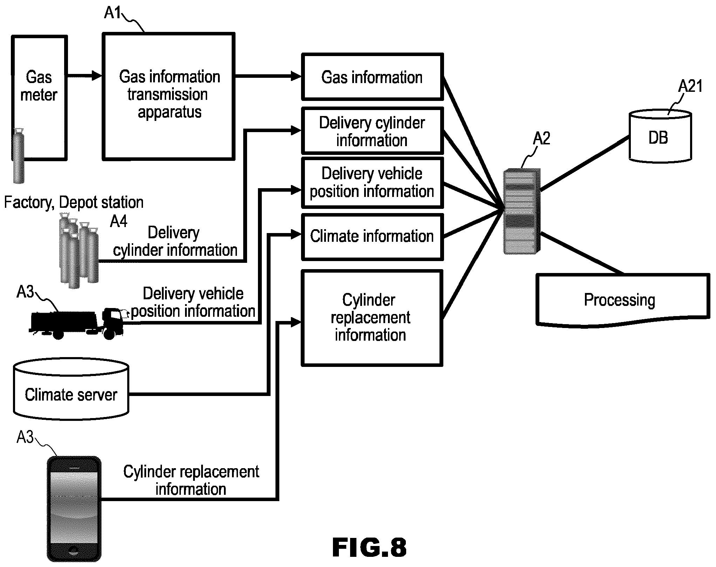

The following describes specific examples of operations that are performed by the information system A according to the present embodiment with reference to a conceptual diagram (FIG. 8) for processing that is performed by the information system A. Note that the conceptual diagram for the system structure of the information system A is FIG. 1.

In the information system A, as described above, pieces of gas information are transmitted from the gas information transmission apparatuses A1 to the information processing apparatus A2 at appropriate points in time, and are accumulated in the information processing apparatus A2. Also, pieces of delivery vehicle position information are transmitted from the deliverer terminals A3 to the information processing apparatus A2, and are accumulated in the information processing apparatus A2. Also, pieces of delivery cylinder information are transmitted from the facility terminals A4 to the information processing apparatus A2, and are accumulated in the information processing apparatus A2. Also, pieces of cylinder replacement information are transmitted from the deliverer terminals A3 to the information processing apparatus A2, and are accumulated in the information processing apparatus A2. Also, the information processing apparatus A2 receives and accumulates climate information from a climate server (not shown). Note that the climate server is a server that stores climate information.

The deliverer terminals A3 that transmit delivery vehicle position information and the deliverer terminals A3 that transmit the deliverer terminals A3 are terminals used by deliverers, and, needless to say, they may be different terminals.

In the information processing apparatus A2, the processing unit A23 performs various kinds of processing, using various kinds of information accumulated in the DB (A21). Examples of the various kinds of processing include delivery date prediction processing, delivery control processing, futures trading processing, residence stay processing, energy optimum plan presentation processing, and household credit rating acquisition processing. Examples of the various kinds of processing may also include processing performed to simply output the results of the above-described statistical processing and various kinds of accumulated information.

As described above, according to the present embodiment, the gas information and so on that contain gas use information regarding the use of LPG cylinders can be collected and used.

In addition, according to the present embodiment, the power consumption of the power source of the gas information transmission apparatuses A1 can be reduced by efficiently transmitting gas information.

In addition, according to the present embodiment, delivery cylinder information that is information regarding the cylinders to be delivered can also be collected and used.

In addition, according to the present embodiment, delivery cylinder information that is information that contains cylinder type information can also be collected and used.

In addition, according to the present embodiment, climate information can also be acquired and used.

Furthermore, according to the present embodiment, cylinder replacement information can be received and used when a cylinder is replaced.

Note that the processing in the present embodiment may be realized using software. This software may be distributed through software downloading or the like. Also, this software may be recorded on a recording medium such as a CD-ROM and distributed. Note that the same applies to the other embodiments in the present description. The software that realizes the gas information transmission apparatuses A1 in the present embodiment is the program described below. That is to say, this program is a program that enables a computer that can access a terminal storage unit that stores pieces of gas information as of two or more points in time to function as: a terminal acquisition unit that acquires gas information that is information that includes gas use information regarding use of gas in an LPG cylinder and corresponds to a cylinder identifier that identifies an LPG cylinder; a terminal accumulation unit that accumulates the gas information acquired by the terminal acquisition unit, in the terminal storage unit; a terminal transmission unit that, when a predetermined condition is satisfied, transmits the pieces gas information as of the two or more pints in time stored in the terminal storage unit to the information processing apparatus in association with a customer identifier.

The software that realizes the information processing apparatus A2 in the present embodiment is the program described below. That is to say, this program is a program that enables a computer that can access a gas storage unit that stores two or more pieces of gas information in association with time information that specifies time, and with a customer identifier, to function as: a gas information reception unit that receives gas information that is associated with a customer identifier, from a gas information transmission apparatus that includes a terminal acquisition unit that acquires gas information that is information that includes gas use information regarding use of gas in an LPG cylinder and corresponds to a customer identifier, and a terminal transmission unit that transmits the gas information acquired by the terminal acquisition unit to the information processing apparatus; a gas information accumulation unit that accumulates the gas information received by the gas information reception unit, in the gas information storage unit in association with time information, and with a customer identifier; and a processing unit that performs predetermined processing, using two or more pieces of gas information stored in the gas information storage unit.

### Embodiment 2

The present embodiment describes an information system B that includes an information processing apparatus that predicts a delivery date of a gas cylinder for each household, using gas use information regarding the use of gas in the past. In the present embodiment, information accumulated by the information system A according to Embodiment 1 can be used as gas use information and so on used to predict the delivery date of the gas cylinder.

The present embodiment also describes an information system B that includes an information processing apparatus that predicts the delivery date of a gas cylinder, using climate information as well.

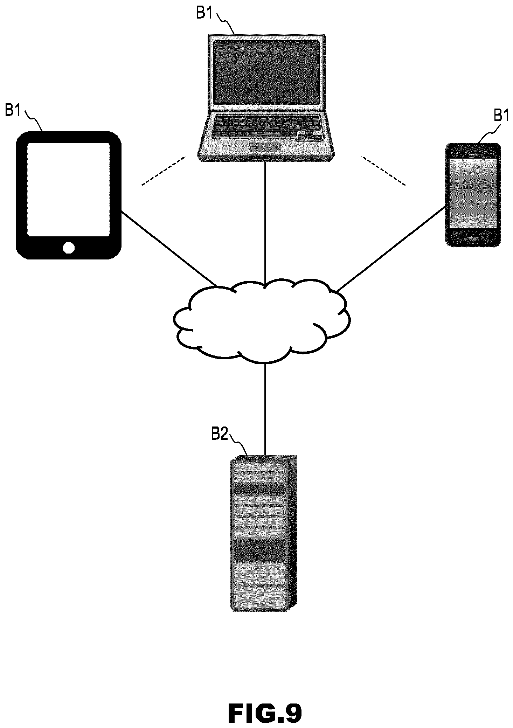

FIG. 9 is a conceptual diagram for the information system B according to the present embodiment. The information system B includes one or more terminal apparatuses B1 and an information processing apparatus B2.

The terminal apparatuses B1 are terminals that are used by a person who wants to obtain information regarding the scheduled delivery date. The terminal apparatuses B1 are, for example, smartphones, tablet terminals, so-called personal computers, or the like, but there is no limitation on the type thereof.

The information processing apparatus B2 is an apparatus for acquiring the scheduled delivery date. The information processing apparatus B2 can be realized using a so-called cloud server or an ASP server, but there is no limitation on the type thereof. The information processing apparatus B2 may have some or all of the functions of the information processing apparatus A2.

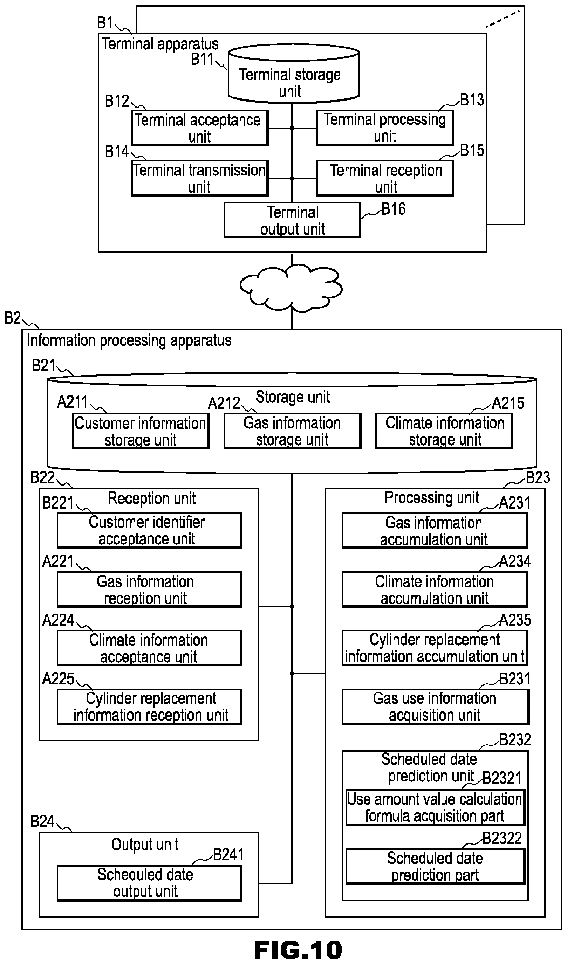

FIG. 10 is a block diagram for the information system B according to the present embodiment.

Each terminal apparatus B1 includes a terminal storage unit B11, a terminal acceptance unit B12, a terminal processing unit B13, a terminal transmission unit B14, a terminal reception unit B15, and a terminal output unit B16.

The information processing apparatus B2 includes a storage unit B21, a reception unit B22, a processing unit B23, and an output unit B24. The storage unit B21 includes the customer information storage unit A211, the gas information storage unit A212, and the climate information storage unit A215. The reception unit B22 includes a customer identifier acceptance unit B221, the gas information reception unit A221, the climate information acceptance unit A224, and the cylinder replacement information reception unit A225. The processing unit B23 includes the gas information accumulation unit A231, the climate information accumulation unit A234, the cylinder replacement information accumulation unit A235, a gas use information acquisition unit B231, and a scheduled date prediction unit B232. The scheduled date prediction unit B232 includes a use amount value calculation formula acquisition part B2321 and a scheduled date prediction part B2322. The output unit B24 includes a scheduled date output unit B241.

The terminal storage unit B11 included in each terminal apparatus B1 stores various kinds of information. Examples of the various kinds of information include a customer identifier.

The terminal acceptance unit B12 accepts instructions, information, and so on. Examples of instructions, information, and so on include a customer identifier and a delivery date prediction instruction. The delivery date prediction instruction is an instruction to carry out delivery date prediction processing. The delivery date prediction instruction may contain a customer identifier that specifies a household for which a prediction date is to be acquired, or may contain no customer identifier. Any input means may be employed to input an instruction, information, and so on, such as a touch panel, a keyboard, a mouse, a menu screen, or the like. The terminal acceptance unit B12 can be realized using a device driver for the input means such as a touch panel or a keyboard, or control software or the like for controlling the menu screen.

The terminal processing unit B13 performs various kinds of processing. Examples of the various kinds of information include processing that is performed to convert the instruction, information, and so on accepted by the terminal acceptance unit B12 to an instruction, information, and so on that have a data structure to be transmitted. Examples of the various kinds of processing also include processing that is performed to convert the information received by the terminal transmission unit B14 so as to have a data structure that is to be output.

The terminal transmission unit B14 transmits various kinds of instructions, information, and so on to the information processing apparatus B2. Examples of the various kinds of instructions, information, and so on include a customer identifier and a delivery date prediction instruction.

The terminal reception unit B15 receives various kinds of information, and so on from the information processing apparatus B2. Examples of the various kinds of information and so on include a set of pieces of information composed of a customer identifier and scheduled date information. Scheduled date information is information that specifies a scheduled delivery date.

The terminal output unit B16 outputs various kinds of information and so on. Examples of the various kinds of information and so on include a set of pieces of information composed of a customer identifier and scheduled date information. Here, "output" typically means displaying on a display device, but may be regarded as a concept that includes projection with a projector, printing with a printer, sound output, transmission to an external apparatus, accumulation on a recording medium, delivery of processing results to another processing apparatus or another program, and so on.

The storage unit B21 included in the information processing apparatus B2 stores various kinds of information. Examples of the various kinds of information include customer information, gas information, and climate information.

The reception unit B22 receives various kinds of information. Examples of the various kinds of information include a customer identifier, gas information, climate information, and cylinder replacement information.

The customer identifier acceptance unit B221 accepts a customer identifier. Here, "acceptance" means reception from the terminal apparatuses B1 and so on, for example. However, "acceptance" may be regarded as a concept that includes acceptance of information input from an input device such as a keyboard, a mouse, or a touch panel, or acceptance of information read from a recording medium such as an optical disk, a magnetic disk, or a semiconductor memory.

The processing unit B23 performs various kinds of processing. Examples of the various kinds of processing include processing that is performed by the gas information accumulation unit A231, processing that is performed by the climate information accumulation unit A234, processing that is performed by the cylinder replacement information accumulation unit A235, processing that is performed by the gas use information acquisition unit B231, and processing that is performed by the scheduled date prediction unit B232.

The gas use information acquisition unit B231 acquires pieces of gas use information as of two or more points in time, paired with the customer identifier accepted by the customer identifier acceptance unit B221, from the gas information storage unit A212. The customer identifier accepted by the customer identifier acceptance unit B221 may be the customer identifier acquired by the customer identifier acceptance unit B221.

The scheduled date prediction unit B232 acquires scheduled date information, using the pieces of gas use information as of two or more points in time acquired by the gas use information acquisition unit B231. Scheduled date information is information regarding a scheduled delivery date. Scheduled date information typically is information that specifies a scheduled delivery date. The scheduled delivery date is a date on which the amount of gas in the cylinder is small enough to satisfy a predetermined condition. Examples of the predetermined condition include that the amount of gas in the cylinder is 0, the amount of gas in the cylinder is no greater than a threshold value (for example, 10%) relative to the entire capacity, or less than the threshold value, and so on. The scheduled date information may indicate the scheduled delivery date itself, or the estimated number of days to the next delivery from the current delivery.

The scheduled date prediction unit B232 acquires scheduled date information, using the pieces of gas use information as of two or more points in time acquired by the gas use information acquisition unit B231, and the climate information accepted by the climate information acceptance unit A224.

The scheduled date prediction unit B232 acquires scheduled date information regarding the scheduled delivery date that is a date on which the amount of gas in the cylinder is small enough to satisfy a predetermined condition, using the pieces of gas use information as of two or more points in time acquired by the gas use information acquisition unit B231, and if the climate information accepted by the climate information acceptance unit A224 is information that indicates a temperature that is high enough to satisfy a predetermined condition, the scheduled date prediction unit B232 corrects the scheduled date information so that the scheduled delivery date specified by the scheduled date information is set to be a later date, and acquires the scheduled date information to be output.

In addition, the scheduled date prediction unit B232 acquires scheduled date information regarding the scheduled delivery date that is a date on which the amount of gas in the cylinder is small enough to satisfy a predetermined condition, using the pieces of gas use information as of two or more points in time acquired by the gas use information acquisition unit B231, and if the climate information accepted by the climate information acceptance unit A224 is information that indicates that the temperature is low enough to satisfy a predetermined condition, the scheduled date prediction unit B232 corrects the scheduled date information so that the scheduled delivery date specified by the scheduled date information is set to be an earlier date, and acquires the scheduled date information to be output.

The following describes three specific examples of processing that are performed by the scheduled date prediction unit B232 to acquire scheduled date information.

(1) When the use amount value calculation formula acquisition part B2321 and the scheduled date prediction part B2322 acquire scheduled date information, and climate information is not used.

The scheduled date prediction unit B232 may use the use amount value calculation formula acquisition part B2321 and the scheduled date prediction part B2322 to acquire scheduled date information.

The use amount value calculation formula acquisition part B2321 acquires a use amount value calculation formula that is a use amount value calculation formula that is a calculation formula for calculating information regarding the amount of gas used, using the pieces of gas use information as of two or more points in time acquired by the gas use information acquisition unit B231. Here, information regarding the amount of gas used may be the amount of gas used per unit time, or a cumulative amount of gas used. The use amount value calculation formula may include two or more calculation formulas. The use amount value calculation formula includes, for example, two or more calculation formulas for specific time zones. Examples of the use amount value calculation formulas include a linear unit-time calculation formula associated with an identifier that identifies the time.

The use amount value calculation formula acquisition part B2321 acquires a use amount value calculation formula for each customer identifier, for example. The use amount value calculation formula acquisition part B2321 acquires, from the gas information storage unit A212, gas use amount information that is the amount of gas used per unit time, contained in the gas use information paired with a customer identifier, and that is gas use amount information regarding a processing-target period (for example, the month of interest in the last year (for example, March 2018)), for example. Next, the use amount value calculation formula acquisition part B2321 calculates the average value of gas use amount information for each time zone in the processing-target period (average amount of gas used in each time zone), using a plurality of pieces of gas use amount information per unit time for each time zone (for example, 0:00 to 1:00, ..., 6:00 to 7:00, 7:00 to 8:00, ..., 12:00 to 13:00, ..., 17:00 to 18:00, 18:00 to 19:00, ..., 23:00 to 24:00), for example.

Thereafter, the use amount value calculation formula acquisition part B2321 acquires a calculation formula that expresses a graph that has the time zone as the horizontal axis and the average value of gas use information as the vertical axis, and is composed of a set of linear expressions with the average value of each time zone as the passing coordinates. Note that the use amount value calculation formula in such a case is a calculation formula that expresses a so-called bathtub curve.

Note that the use amount value calculation formula acquisition part B2321 may acquire, for example, one approximate calculation formula that passes through the average value, using the average value in each time zone.

Also, the usage value calculation formula acquisition part B2321 may calculate, for example, the cumulative value in each time zone of the average value in each time zone, and acquires a calculation formula that expresses a graph that has the time zone as the horizontal axis and the cumulative value as the vertical axis. That is to say, the use amount value calculation formula acquisition part B2321 need only acquire a calculation formula for calculating the amount of gas to be used in the future, using the gas use amount information in the past.

It is preferable that the use amount value calculation formula acquisition part B2321 acquire a calculation formula for each customer identifier, each day, each week, each month, and each year.

The scheduled date prediction unit B2322 acquires scheduled date information, using the use amount value calculation formula acquired by the use amount value calculation formula acquisition part B2321. The scheduled date prediction part B2322 calculates the number of days from when the gas cylinder is full to when the amount of gas in the gas cylinder is small enough to satisfy a predetermined condition, using the use amount value calculation formula, and acquires a scheduled delivery date by adding the number of days to the date on which a gas cylinder was replaced, for example. Note that the date on which a gas cylinder was replaced is date information that is included in cylinder replacement information, or date information paired with cylinder replacement information, and is information acquired from the customer information storage unit A211. In addition, such scheduled date information is information that specifies the scheduled delivery date at the initial prediction.

The scheduled date prediction part B2322 acquires LPG cylinder information that is paired with the customer identifier accepted by the customer identifier acceptance unit B221, from the customer information storage unit A211, and acquires scheduled date information, using the LPG cylinder information and the use amount value calculation formula acquired by the use amount value calculation formula acquisition part B2321, for example. The scheduled date prediction part B2322 acquires the difference between the cumulative value (actual value) of the amount of gas used, specified by cylinder amount information contained in LPG cylinder information paired with the customer identifier received by the customer identifier acceptance unit B221, and the cumulative value (predicted value) of the amount of gas used, acquired using the use amount value calculation formula acquired by the use amount value calculation formula acquisition part B2321, and if the difference is greater than a threshold value and the actual value excesses the predicted value, the scheduled date prediction part B2322 acquires scheduled date information that indicates a scheduled delivery date set to be earlier than the originally predicted scheduled delivery date according to the amount of excess, for example. The scheduled date prediction part B2322 acquires the difference between the cumulative value (actual value) of the amount of gas used, specified by cylinder amount information contained in LPG cylinder information paired with the customer identifier received by the customer identifier acceptance unit B221, and the cumulative value (predicted value) of the amount of gas used, acquired using the use amount value calculation formula acquired by the use amount value calculation formula acquisition part B2321, and if the difference is greater than a threshold value and the predicted value excesses the actual value, the scheduled date prediction part B2322 acquires scheduled date information that indicates a scheduled delivery date set to be later than the originally predicted scheduled delivery date according to the amount of excess, for example. Note that the use amount value calculation formula acquired by the use amount value calculation formula acquisition part B2321 is a use amount value calculation formula that is paired with the customer identifier accepted by the customer identifier acceptance unit B221.

(2) When the use amount value calculation formula acquisition part B2321 and the scheduled date prediction part B2322 acquire scheduled date information, and climate information is used.

The scheduled date prediction part B2322 acquires scheduled date information in which climate information is not considered, according to the algorithm in (1).

Next, the scheduled date prediction part B2322 acquires one or more pieces of climate information (for example, temperature information) paired with the time information corresponding to the use amount information from which the use amount value calculation formula was acquired, from the climate information storage unit A215. Note that such climate information is referred to as a past climate information group.

Thereafter, the scheduled date prediction part B2322 acquires one or more pieces of climate information (for example, temperature information) regarding the future, which is information regarding future weather forecast, from the climate information storage unit A215. Note that future climate information is, for example, climate information up to the date specified by the scheduled date information acquired according to the algorithm in (1). Note that such climate information is referred to as a future climate information group.

Next, the scheduled date prediction part B2322 compares the past climate information group and the future climate information group, and if it is determined that the difference therebetween is large or small enough to satisfy a predetermined condition, the scheduled date prediction part B2322 acquires corrected scheduled date information so as to set the scheduled date information acquired according to the algorithm in (1) to be later or earlier.

More specifically, the scheduled date prediction part B2322 acquires a past average temperature, which is the average temperature, from the past climate information group. Also, the scheduled date prediction part B2322 acquires a future average temperature, which is the average temperature, from the future climate information group. If "future average temperature - past average temperature" is no less than a first threshold value or greater than the first threshold value, the scheduled date prediction part B2322 acquires scheduled date information updated so as to set the date specified by the scheduled date information acquired according to the algorithm in (1) to be a later date, based on the difference therebetween. If "past average temperature - future average temperature" is no less than a second threshold value or greater than the second threshold value, the scheduled date prediction part B2322 acquires scheduled date information updated so as to set the date specified by the scheduled date information acquired according to the algorithm in (1) to be an earlier date, based on the difference therebetween.

(3) When scheduled date information is acquired using a machine learning algorithm, and climate information is not used.

The scheduled date prediction unit B232 may acquire scheduled date information using a machine learning algorithm, using the pieces of gas use information as of two or more points in time acquired by the gas use information acquisition unit B231.

That is to say, the scheduled date prediction unit B232 performs processing to form a learner device, and processing to predict the scheduled date, as described below.

### (3-1) Processing that is Performed to Form Leaner

The scheduled date prediction unit B232 acquires past gas use information for a certain period from the time when the gas cylinder is full, from gas use information that is past gas use information acquired from when the gas cylinder is full to when the gas cylinder is empty, and a period from when the gas cylinder is full to when the gas cylinder is empty (also referred to as a "redelivery period" when appropriate), using past gas information that is paired with the customer identifier, for example. Thereafter, the scheduled date prediction unit B232 forms a learner device to which gas use information acquired in a certain period in the past from when the gas cylinder is full is input, and that outputs a redelivery period, according to the machine learning algorithm. That is to say, the scheduled date prediction unit B232 acquires two or more sets of pieces of information composed of gas use information for a certain period in the past from when the gas cylinder is full and a redelivery period, provides the two or more sets of pieces of information thus acquired, to a module for forming a learner for machine learning to form a learner, and accumulates it in the storage unit B21, for example. Note that there is no limitation on the machine learning algorithm, which may be, for example, deep learning, random forest, SVR, or the like. In addition, the machine learning module may be any module, such as a TensorFlow module, fastText, TinySvm, any kind of RandomForest function, or the like. The learner may be referred to as a classifier.

### (3-2) Scheduled Date Prediction Processing

Next, the scheduled date prediction unit B232 performs scheduled date prediction processing, using the learner formed in (3-1).

That is to say, the scheduled date prediction unit B232 forms a vector, using the pieces of gas use information as of the latest two or more points in time acquired by the gas use information acquisition unit B231, provides the vector and the learner in the storage unit B21 to a module for performing prediction in machine learning, and acquires a redelivery period, using a machine learning algorithm. Note that there is no limitation on the machine learning algorithm in the case of such prediction as well, which may be, for example, deep learning, random forest, SVR, or the like. In addition, the machine learning module for prediction may be any module, such as a TensorFlow module, fastText, TinySvm, any kind of RandomForest function, or the like.

Next, the scheduled date prediction unit B232 acquires scheduled date information that includes the scheduled delivery date obtained by adding the acquired period to the latest date on which the gas cylinder was replaced. The latest date on which the gas cylinder was replaced is date information included in cylinder replacement information or date information paired with cylinder replacement information, and is information acquired from the customer information storage unit A211.
(4) When scheduled date information is acquired using a machine learning algorithm, and climate information is used.

The case in which climate information is used according to a machine learning algorithm can be classified into the following two cases depending on how climate information is used.

### (4-1) Correction is made using climate information.

The scheduled date prediction unit B232 may use the pieces of gas use information as of two or more points in time acquired by the gas use information acquisition unit B231, and the climate information acquired by the climate information acceptance unit A224, to acquire scheduled date information.

That is to say, the scheduled date prediction unit B232 acquires scheduled date information by performing prediction processing based on the machine learning described in (3-2) above, for example. Next, the scheduled date prediction unit B232 acquires climate information that includes future weather forecast (for example, a set of pieces of temperature information). Thereafter, the scheduled date prediction unit B232 acquires climate information (for example, a set of pieces of temperature information) paired with the date information paired with the gas use information from which the learner was formed, from the climate information storage unit A215. If the climate indicated by the climate information in the weather forecast is in formation that indicates climate that is colder enough to satisfy a predetermined condition in comparison with the climate indicated by the climate information corresponding to the gas use information from which the learner was formed, the amount of gas used increases, and therefore the scheduled date prediction unit B232 acquires scheduled date information in which the scheduled data indicated by the scheduled date information acquired through the above-described machine learning is set to be an earlier date. If the climate indicated by the climate information in the weather forecast is in formation that indicates climate that is warmer enough to satisfy a predetermined condition in comparison with the climate indicated by the climate information corresponding to the gas use information from which the learner was formed, the amount of gas used is expected to decrease, and therefore the scheduled date prediction unit B232 acquires scheduled date information in which the scheduled data indicated by the scheduled date information acquired through the above-described machine learning is set to be a later date. It is preferable that the number of dates to be reduced or added increases depending on the difference between the temperatures indicated by the two pieces of climate information.

### (4-2) When climate information is used as well to form a learner.

The scheduled date prediction unit B232 may acquire scheduled date information, using a machine learning algorithm, and using the pieces of gas use information as of two or more points in time acquired by the gas use information acquisition unit B231, and climate information (for example, one or more of the weather and the temperature).

That is to say, the scheduled date prediction unit B232 The scheduled date prediction unit B232 acquires gas use information for a certain period in the past from the time when the gas cylinder is full, from gas use information that is past gas use information acquired from when the gas cylinder is full to when the gas cylinder is empty, and a redelivery period, using past gas information that is paired with the customer identifier, for example. Also, the scheduled date prediction unit B232 acquires climate information paired with the date information corresponding to gas use information for a certain period in the past from when the gas cylinder was full, for example.

Thereafter, the scheduled date prediction unit B232 forms a learner device to which gas use information acquired in a certain period in the past from when the gas cylinder is full, and climate information are input, and that outputs a redelivery period, according to the machine learning algorithm. Note that weather information contained in climate information is converted into a value such as "1" for "fine", "2" for "cloudy", and "3" for "rain", and constitutes a vector element. Climate information is the temperature, for example, and constitutes a vector element.

Thereafter, the scheduled date prediction unit B232 acquires two or more sets of pieces of information composed of gas use information and climate information for a certain period in the past from when the gas cylinder is full and a redelivery period, provides the two or more sets of pieces of information thus acquired, to a module for forming a learning device for machine learning to form a learning device, and accumulates it in the storage unit B21, for example. Note that information given to the module typically is a multidimensional vector. In addition, the scheduled date prediction unit B232 forms a learner to which a vector of a set of (gas use information, temperature, weather information) for each time zone in a certain period is input, and that outputs a redelivery period, using a machine learning algorithm, for example.

That is to say, the scheduled date prediction unit B232 forms vector, using the pieces of gas use information as of the latest two or more points in time acquired by the gas use information acquisition unit B231, and climate information, provides the vector and the learner in the storage unit B21 to a module for performing prediction in machine learning, and acquires a redelivery period, using a machine learning algorithm.

The output unit B24 outputs various kinds of information. Examples of the various kinds of information include scheduled date information. In addition, "output" here means accumulation in the customer information storage unit A211, for example. In addition, "output" means display or transmission, for example. When "output" means display, the output unit B24 may be regarded as including or not including an output device such as a display or a speaker. The output unit B24 can be realized using the driver software of the output device, the driver software of the output device and the output device, or the like.

The scheduled date output unit B241 outputs the scheduled date information acquired by the scheduled date prediction unit B232. The scheduled date output unit B241 typically outputs the scheduled date information in association with customer identifiers.

It is preferable that the terminal storage unit B11, the storage unit B21, the customer information storage unit A211, the gas information storage unit A212, and the climate information storage unit A215 are realized using a non-volatile recording medium, but they may be realized using a volatile recording medium.

There is no limitation on the process in which information is stored in the terminal storage unit B11 and so on. For example, information may be stored in the terminal storage unit B11 or the like via a recording medium, or information transmitted via a communication line or the like may be stored in the terminal storage unit B11 or the like, or information input via an input device may be stored in the terminal storage unit B11 or the like.

The terminal processing unit B13, the processing unit B23, the gas use information acquisition unit B231, the scheduled date prediction unit B232, the use amount value calculation formula acquisition part B2321, and the scheduled date prediction part B2322 can typically be realized using an MPU, a memory, or the like. The processing procedures performed by the terminal processing unit B13 and so on typically are realized using software, and the software is recorded on a recording medium such as a ROM. However, such processing procedures may be realized using hardware (a dedicated circuit).

The terminal transmission unit B14, the output unit B24, and the scheduled date output unit B241 typically are realized using a wireless or wired communication means, but may be realized using a broadcast means.

The terminal reception unit B15, the reception unit B22, and the customer identifier acceptance unit B221 typically are realized using a wireless or wired communication means, but may be realized using a means for receiving broadcast.

The terminal output unit B16 may be regarded as including or not including an output device such as a display or a speaker. The terminal output unit B16 can be realized using the driver software of the output device, the driver software of the output device and the output device, or the like.

Next, operations that are performed by the information system B will be described. First, operations that are performed by the terminal apparatuses B1 will be described.

The terminal acceptance unit B12 of the terminal apparatuses B1 accepts a delivery date prediction instruction. Next, the terminal processing unit B13 forms a delivery date prediction instruction that is to be transmitted. Next, the terminal transmission unit B14 transmits the formed delivery date prediction instruction to the information processing apparatus B2. Next, the terminal reception unit B15 receives scheduled date information for each customer corresponding to the delivery date prediction instruction. Thereafter, the terminal processing unit B13 forms information that is to be output, using the scheduled date information for each customer thus received. Next, the terminal output unit B16 outputs scheduled date information for each customer.

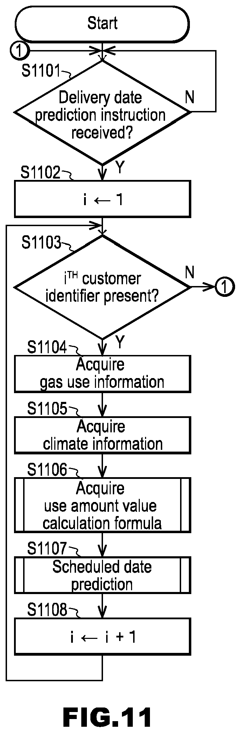

Next, an example of delivery date prediction processing that is performed by the information processing apparatus B2 will be described with reference to the flowchart shown in FIG. 11.

(Step S1101) The reception unit B22 determines whether or not a delivery date prediction instruction has been received from the terminal apparatuses B1. If a delivery date prediction instruction has been received, processing proceeds to step S1102, and if a delivery date prediction instruction has not been received, processing returns to step S1101. Note that the delivery date prediction instruction here is an instruction to acquire delivery date prediction date for every customer.

(Step S1102) The processing unit B23 substitutes 1 for a counter i.

(Step S1103) The processing unit B23 determines whether or not the i^{th} customer identifier is present in the storage unit B21. If the i^{th} customer identifier is present, processing proceeds to step S1104, and if the i^{th} customer identifier is not present, processing returns to step S1101. The determination regarding whether or not the i^{th} customer identifier is present is determination regarding whether or not the i^{th} customer is present.

(Step S1104) The gas use information acquisition unit B231 acquires the gas use information paired with the i^{th} customer identifier from the gas information storage unit A212.

(Step S1105) The gas use information acquisition unit B231 acquires climate information for the target period from the climate information storage unit A215.

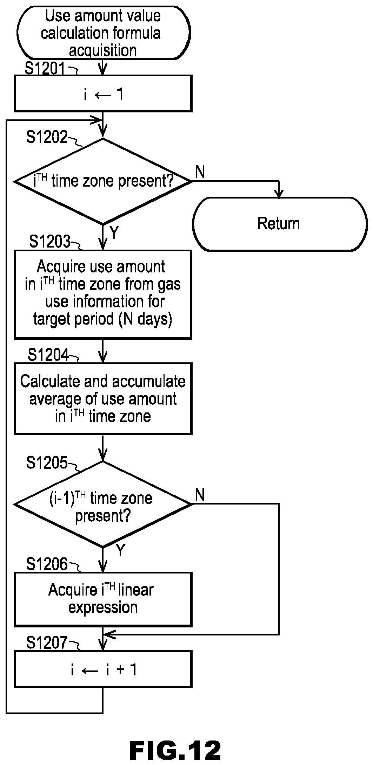

(Step S1106) The use amount value calculation formula acquisition part B2321 performs use amount value calculation formula acquisition processing. Use amount value calculation formula acquisition processing will be described with reference to the flowchart shown in FIG. 12.

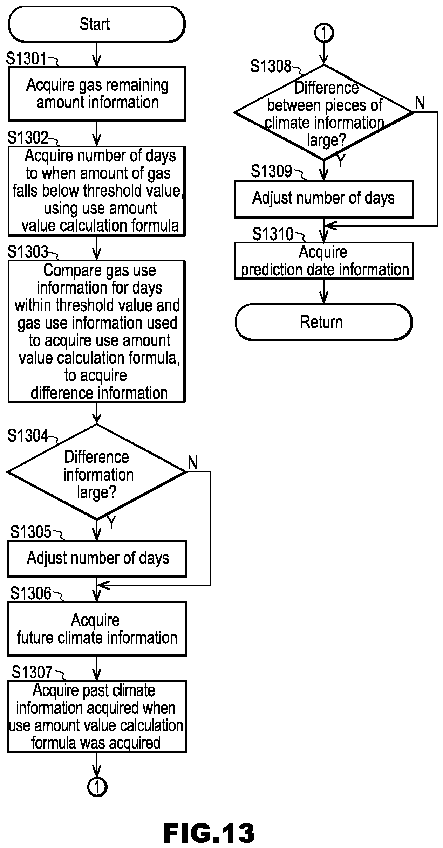

(Step S1107) The scheduled date prediction part B2322 performs scheduled date prediction processing. Scheduled date prediction processing will be described with reference to the flowchart shown in FIG. 13.

(Step S1108) The processing unit B23 increments the counter i by 1. Processing returns to step S1103.

In the flowchart shown in FIG. 11, processing is terminated when power is turned off or an interruption is made to terminate the processing.

Next, the use amount value calculation formula acquisition processing in step S1106 will be described with reference to the flowchart shown in FIG. 12.

(Step S1201) The use amount value calculation formula acquisition part B2321 substitutes 1 for the counter i.

(Step S1202) The use amount value calculation formula acquisition part B2321 determines whether or not the i^{th} time zone is present. If the i^{th} time zone is present, processing proceeds to step S1203, and if the i^{th} time zone is not present, processing returns to higher level processing. Note that, if each time zone is 1 hour, i from 1 to 24 can be taken.

(Step S1203) The use amount value calculation formula acquisition part B2321 acquires all pieces of unit time gas use information regarding the i^{th} time zone from the gas use amount information for the target period (for example, for N days) corresponding to the i^{th} time zone. Note that unit time gas use information is information that indicates the amount of gas used per unit time.

(Step S1204) The use amount value calculation formula acquisition part B2321 calculates the average value of the pieces of unit time gas use information acquired in step S1203, and temporarily accumulate it in the storage unit B21.

(Step S1205) The use amount value calculation formula acquisition part B2321 determines whether or not the (i-1)^{th} time zone is present. If the (i-1)^{th} time zone is present, processing proceeds to step S1206, and the (i-1)^{th} time zone is not present, processing proceeds to step S1207.

(Step S1206) The use amount value calculation formula acquisition part B2321 acquires the i^{th} linear expression, using the average value of the pieces of unit time gas use information regarding the (i-1)^{th} time zone and the average value of the pieces of unit time gas use information regarding the i^{th} time zone. Note that this linear expression is a straight line that connects the average value of the pieces of unit time gas use information regarding the (i-1)^{th} time zone and the average value of the pieces of unit time gas use information regarding the i^{th} time zone. Note that this linear expression is paired with the customer identifiers and is stored in the customer information storage unit A211.

(Step S1207) The use amount value calculation formula acquisition part B2321 increments the counter i by 1. Processing returns to step S1202.

Next, the scheduled date prediction processing in step S1107 will be described with reference to the flowchart shown in FIG. 13.

(Step S1301) The scheduled date prediction part B2322 acquires remaining gas amount information paired with the target customer identifier. Note that remaining gas amount information is stored in the customer information storage unit A211, for example. Also, the cumulative use amount of gas is acquired using gas use information paired with the customer identifier, and for the dates after the date corresponding to cylinder replacement information (the date when the gas cylinder was replaced), the gas cumulative use amount is subtracted from capacity information corresponding to the cylinder type information paired with the customer identifier, and thus remaining gas amount information is acquired by the scheduled date prediction part B2322.

(Step S1302) The scheduled date prediction part B2322 acquires the use amount value calculation formula paired with the target customer identifier from the customer information storage unit A211. Thereafter, the scheduled date prediction part B2322 acquires the number of days from when the cylinder was full to when the amount of gas falls below a threshold value, using the use amount value calculation formula.

(Step S1303) The scheduled date prediction part B2322 acquires pieces of gas use information that are paired with the target customer identifiers and are for days within a threshold value (a first gas use information group) from the gas information storage unit A212. Also, the scheduled date prediction part B2322 acquires pieces of gas use information that are paired with the target customer identifiers and were used when the use amount value calculation formula was acquired (a second gas use information group) from the gas information storage unit A212. Next, the scheduled date prediction part B2322 compares the first gas use information group and the second gas use information group with each other to acquire difference information regarding the difference therebetween. For example, the scheduled date prediction part B2322 calculates the average daily gas use amount (a first average use amount) from the first gas use information group. Also, the scheduled date prediction part B2322 calculates the average daily gas use amount (a second average use amount) from the second gas use information group. Thereafter, the scheduled date prediction part B2322 acquires the difference between the first average use amount and the second average use amount as difference information, for example. Note that difference information typically is information that specifies the difference between the representative value of the first gas use information group and the representative value of the second gas use information group. A representative value may be a median value, a maximum value, or the like instead of the average value.

(Step S1304) The scheduled date prediction part B2322 determines whether or not the difference information acquired in step S1303 is large enough to satisfy a predetermined condition. If it is large, processing proceeds to step S1305, and if it is not large, processing proceeds to step S1306.

(Step S1305) The scheduled date prediction part B2322 adjusts the number of days acquired in step S1302. Note that, if "the first average use amount - the second average use amount" is positive and the difference information is large, the scheduled date prediction part B2322 reduces the number of days acquired in strep S1302 according to the difference information. If "the second average use amount - the first average use amount" is positive and the difference information is large, the scheduled date prediction part B2322 increases the number of days acquired in strep S1302 according to the difference information. The scheduled date prediction part B2322 adjusts the number of days to be subtracted or added such that the larger the absolute value of the difference information is, the larger the number of days is. The scheduled date prediction part B2322 calculates the number of days to be subtracted or added, using an increasing function in which the absolute value of the difference information is used as a parameter.

(Step S1306) The scheduled date prediction part B2322 acquires a feature climate information group that is information regarding a future weather forecast, from the climate information storage unit A215.

(Step S1307) The scheduled date prediction part B2322 acquires a past climate information group acquired when the use amount value calculation formula was acquired, from the climate information storage unit A215.

(Step S1308) The scheduled date prediction part B2322 determines whether or not the difference between the future climate information group and the past climate information group is large enough to satisfy a predetermined condition. If the difference is large enough to satisfy the predetermined condition, processing proceeds to step S1309, and if the difference is not large enough to satisfy the predetermined condition, processing proceeds to step S1310. Note that the predetermined condition is that "the difference between the average temperatures is no less than a threshold value" or "the difference between the average temperatures is greater than a threshold value".

(Step S1309) The scheduled date prediction part B2322 performs day number adjustment according to the difference between the future climate information group and the past climate information group. An example of the day number adjustment using climate information is described above, and therefore the details thereof will be omitted here. The scheduled date prediction part B2322 acquires the number of days to be adjusted by, for example, an increase function using the difference between the future climate information group and the past climate information group as a parameter.

(Step S1310) The scheduled date prediction part B2322 acquires prediction date information by adding the number of days thus acquired to the current date. Processing returns to higher level processing.

As described above, according to the present embodiment, the next delivery date of a gas cylinder to a customer can be predicted using gas use information.

Also, according to the present embodiment, the next delivery date of a gas cylinder can be more accurately predicted using climate information as well.

In addition, in the present embodiment, the delivery date ahead of the next time may be predicted. In such a case, the information processing apparatus B2 can predict the next, next delivery date by performing the same processing as the processing described above, based on the predicted next delivery date. That is to say, the information processing apparatus B2 can predict the (n+1)^{th} delivery date by performing the same processing as the processing described above, based on the n^{th} delivery date in the future.

The processing in the present embodiment may be realized using software. This software may be distributed through software downloading or the like. Also, this software may be recorded on a recording medium such as a CD-ROM and distributed. Note that the same applies to the other embodiments in the present description. The software that realizes the information processing apparatus B2 in the present embodiment is the program described below. That is to say, this program is a program that enables a computer that can access a gas information terminal storage unit that stores two or more pieces of gas information that include pieces of gas use information regarding use of gas in an LPG cylinder as of two or more points in time, in association with a customer identifier that identifies a customer, to function as: a customer identifier acceptance unit that accepts a customer identifier; a gas use information acquisition unit that acquires pieces of gas use information as of two or more points in time, paired with the customer identifier accepted by the customer identifier acceptance unit, from the gas information storage unit; a scheduled date prediction unit that acquires scheduled date information regarding a scheduled delivery date that is a date on which the amount of gas in a cylinder is small enough to satisfy a predetermined condition, using the pieces of gas use information as of two or more points in time acquired by the gas use information acquisition unit; and a scheduled date output unit that outputs the scheduled date information acquired by the scheduled date prediction unit.

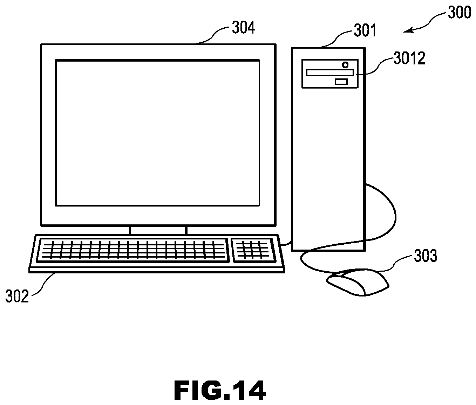

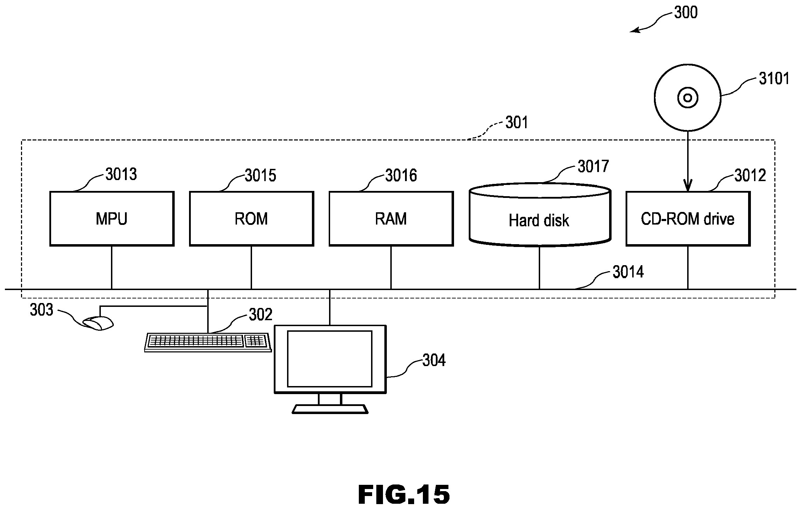

FIG. 14 shows an external appearance of a computer that realizes the information processing apparatus B2 and so on according to the various embodiments described above by executing the programs described in the present description. The above-described embodiments can be realized using computer hardware and a computer program that is executed thereon. FIG. 14 is an overview diagram for this computer system 300, and FIG. 15 is a block diagram for the system 300.

In FIG. 14, the computer system 300 includes a computer 301 that includes a CD-ROM drive, a keyboard 302, a mouse 303, and a monitor 304.

In FIG. 15, the computer 301 includes, in addition to a CD-ROM drive 3012, an MPU 3013, a bus 3014 that is connected to the CD-ROM drive 3012 and so on, a ROM 3015 for storing programs such as a bootup program, a RAM 3016 that is connected to the MPU 3013 to temporarily store an instruction from an application program, and provide a temporary memory space, and a hard disk 3017 for storing an application program, a system program, and data. Although not illustrated here, the computer 301 may further include a network card that provides connection to a LAN.

The program that causes the computer system 300 to execute the functions of the information processing apparatus B2 and so on according to the above-described embodiments may be stored in a CD-ROM 3101, inserted into the CD-ROM drive 3012, and further transferred to the hard disk 3017. Instead, the program may be transmitted to the computer 301 via a network (not shown), and stored in the hard disk 3017. The program is loaded to the RAM 3016 when it is to be executed. The program may be loaded directly from the CD-ROM 3101 or a network.

The program does not necessarily include an operating system (OS) that causes the computer 301 to execute functions such as the information processing apparatus B2 according to the above-described embodiments, a third-party program, or the like. The program need only include an instruction part that calls an appropriate function (module) in a controlled manner to obtain the desired result. It is well known how the computer system 300 works, and therefore detailed description thereof will be omitted.

A single computer or a plurality of computers may execute the above-described program. That is to say, centralized processing or distributed processing may be performed.

Also, as a matter of course, in each of the above-described embodiments, the two or more communication means that exist in one apparatus may be physically realized using one medium.

Furthermore, in each of the above-described embodiments, each kind of processing may be realized through centralized processing that is performed by a single apparatus, or may be realized through distributed processing that is performed by a plurality of apparatuses.

The present invention is not limited to the above-described embodiments, and various modifications can be made. Such modifications are also included in the scope of the present invention as a matter of course.

### Industrial Applicability

As described above, the information processing apparatus according to the present invention achieves the effect of predicting the delivery date of a gas cylinder for a customer, and is useful as an information processing apparatus or the like.

## Claims

1. An information processing apparatus comprising:
a gas information storage unit that stores two or more pieces of gas information that contain gas use information as of two or more points in time, regarding use of gas in an LPG cylinder, in association with a customer identifier that identifies a customer;
a customer identifier acceptance unit that accepts a customer identifier;
a gas use information acquisition unit that acquires pieces of gas use information as of two or more points in time, paired with the customer identifier accepted by the customer identifier acceptance unit, from the gas information storage unit;
a scheduled date prediction unit that acquires scheduled date information regarding a scheduled delivery date that is a date on which the amount of gas in a cylinder is small enough to satisfy a predetermined condition, using the pieces of gas use information as of two or more points in time acquired by the gas use information acquisition unit; and
a scheduled date output unit that outputs the scheduled date information acquired by the scheduled date prediction unit.

2. The information processing apparatus according to claim 1, further comprising:
a customer information storage unit that stores one or more pieces of customer information that contain LPG cylinder information that contain cylinder capacity information regarding a capacity of an LPG cylinder of a customer identified by a customer identifier, in association with the customer identifier,
wherein the scheduled date prediction unit includes:
a use amount value calculation formula acquisition part that acquires a use amount value calculation formula that is a calculation formula for calculating information regarding an amount of gas used, using the pieces of gas use information as of two or more points in time acquired by the gas use information acquisition unit; and
a scheduled date prediction part that acquires scheduled date information by acquiring LPG cylinder information that is paired with the customer identifier accepted by the customer identifier acceptance unit, from the customer information storage unit, and using the LPG cylinder information and the use amount value calculation formula acquired by the use amount value calculation formula acquisition part.

3. The information processing apparatus according to claim 1 or 2, further comprising:
a climate information acceptance unit that accepts climate information regarding climate,
wherein the scheduled date prediction unit acquires scheduled date information, using the pieces of gas use information as of two or more points in time acquired by the gas use information acquisition unit, and the climate information accepted by the climate information acceptance unit.

4. The information processing apparatus according to claim 3,
wherein the scheduled date prediction unit acquires scheduled date information regarding a scheduled delivery date that is a date on which an amount of gas in a cylinder is small enough to satisfy a predetermined condition, using the pieces of gas use information as of two or more points in time acquired by the gas use information acquisition unit, and if the climate information accepted by the climate information acceptance unit is information that indicates that a temperature is high enough to satisfy a predetermined condition, or low enough to satisfy a predetermined condition, the scheduled date prediction unit corrects the scheduled date information so that the scheduled delivery date specified by the scheduled date information is set to be a later date or an earlier date, and acquires the scheduled date information to be output.

5. The information processing apparatus according to any one of claims 1 to 4, further comprising:
a gas information storage unit that stores two or more pieces of gas information that contain gas use information, in association with a customer identifier;
a gas information reception unit that receives gas information that is associated with a cylinder identifier, from a gas information transmission apparatus that includes a terminal acquisition unit that acquires gas information that is information that contains gas use information regarding use of gas in an LPG cylinder and corresponds to a cylinder identifier that identifies the LPG cylinder, and a terminal transmission unit that transmits the gas information acquired by the terminal acquisition unit to the information processing apparatus; and
a gas information accumulation unit that accumulates the gas information received by the gas information reception unit, in association with the customer identifier associated with the cylinder identifier, in the gas information storage unit.

6. An information processing method that is realized using a gas information storage unit that stores two or more pieces of gas information that contain gas use information as of two or more points in time, regarding use of gas in an LPG cylinder, in association with a customer identifier that identifies a customer, a customer identifier acceptance unit, gas use information acquisition unit, a scheduled date prediction unit, and a scheduled date output unit, the information processing method comprising:
a customer identifier acceptance step in which the customer identifier acceptance unit receives a customer identifier;
a gas use information acquisition step in which the gas use information acquisition unit acquires pieces of gas use information as of two or more points in time, paired with the customer identifier accepted in the customer identifier acceptance step, from the gas information storage unit;
a scheduled date prediction step in which the scheduled date prediction unit acquires scheduled date information regarding a scheduled delivery date that is a date on which an amount of gas in the cylinder is small enough to satisfy a predetermined condition, using the pieces of gas use information as of two or more points in time acquired in the gas use information acquisition step; and
a scheduled date output step in which the scheduled date output unit outputs the scheduled date information acquired in the scheduled date prediction step.

7. A program for enabling a computer that can access a gas information storage unit that stores two or more pieces of gas information that contain gas use information as of two or more points in time, regarding use of gas in an LPG cylinder, in association with a customer identifier that identifies a customer, to function as:
a customer identifier acceptance unit that accepts a customer identifier;
a gas use information acquisition unit that acquires pieces of gas use information as of two or more points in time, paired with the customer identifier accepted by the customer identifier acceptance unit, from the gas information storage unit;
a scheduled date prediction unit that acquires scheduled date information regarding a scheduled delivery date that is a date on which the amount of gas in a cylinder is small enough to satisfy a predetermined condition, using the pieces of gas use information as of two or more points in time acquired by the gas use information acquisition unit; and
a scheduled date output unit that outputs the scheduled date information acquired by the scheduled date prediction unit.
